(19) Europäisches Patentamt
European Patent Office
Office européen des brevets

(11) EP 2 978 601 B1

(12) **EUROPEAN PATENT SPECIFICATION**

(45) Date of publication and mention of the grant of the patent:
**25.07.2018 Bulletin 2018/30**

(21) Application number: **14730021.4**

(22) Date of filing: **08.05.2014**

(51) Int Cl.:
***C09J 175/08*** *(2006.01)*

(86) International application number:
**PCT/US2014/037278**

(87) International publication number:
**WO 2014/193624 (04.12.2014 Gazette 2014/49)**

(54) **LAMINATION METHOD**

LAMINIERUNGSVERFAHREN

PROCÉDÉ DE STRATIFICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2013 US 201361828846 P**

(43) Date of publication of application:
**03.02.2016 Bulletin 2016/05**

(73) Proprietors:
- **Dow Global Technologies LLC**
  **Midland, MI 48674 (US)**
- **Rohm and Haas Company**
  **Philadelphia, PA 19106 (US)**

(72) Inventors:
- **ZUPANCIC, Joseph J.**
  **Glen Ellyn, IL 60137-3217 (US)**
- **HEATH, William H.**
  **Lake Jackson, TX 77566 (US)**
- **JIMENEZ, Jorge**
  **Lake Jackson, TX 77566 (US)**
- **MARINE, Amira A.**
  **Algonquin, IL 60102 (US)**
- **SHUTOV, Pavel L.**
  **A-4020 Linz (AT)**
- **VIETTI, David E.**
  **Cary, IL 60013 (US)**

(74) Representative: **Houghton, Mark Phillip et al**
**Patent Outsourcing Limited**
**1 King Street**
**Bakewell, Derbyshire DE45 1DZ (GB)**

(56) References cited:
**US-A1- 2010 087 593**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This invention relates to forming laminated structures by using two-component urethane compositions.

US 6,462,163 describes urethane compositions made from isocyanate and hydroxy terminated polyesters. US 6,855,844 describes urethane compositions made from isocyanates and polyester-ether polyols. It is desired to provide a method of forming a laminated structure by using two-component urethane compositions that have improved adhesion properties or improved processing properties or both.

US 2010/087593 A1 describes a process for producing a resin composition comprising a thermoplastic polyurethane.

The following is a statement of the invention.

The present invention provides a method of forming a laminated structure comprising

I bringing a component A into contact with a component B to form an adhesive composition,
II forming a layer of said adhesive composition on one surface of a first film, and
III bringing the surface of a second film into contact with said layer of adhesive composition;

wherein said component A comprises one or more polyisocyanate, and wherein said component B comprises one or more hybrid polyol comprising reaction residues of

(i). one initiator polyol having three hydroxyl groups, wherein the number-average molecular weight of said initiator polyol is 900 or lower,
(ii). one or more anhydride, and
(iii). two or more alkylene oxides having the structure

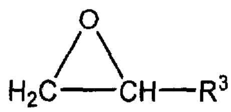

wherein said $R^3$ is an alkyl group,

wherein the mole ratio of said reaction residues of anhydride to said reaction residues of initiator polyol is from 1.0:1 to 3:1.

The following is a detailed description of the invention.

As used herein, the following terms have the designated definitions, unless the context clearly indicates otherwise.

A "polyisocyanate" is a compound having two or more isocyanate groups. An isocyanate group is -NCO. A "polyol" is a compound having two or more pendant hydroxyl groups. The number of pendant hydroxyl groups on a polyol is denoted herein by "N." An "ester polyol" is a polyol that contains one or more ester linkage. A "polyester polyol" is a polyol that contains two or more ester linkages. An ester linkage has the structure -C(O)-O-. An "ether polyol" is a polyol that has one or more ether linkage. A "polyether polyol" is a polyol that has two or more ether linkages. An ether linkage is -C-O-C-. A "hybrid polyol" is a polyol that contains at least one ester linkage and at least one ether linkage. A urethane linkage is -NH-C(O)-O-.

A first compound is said herein to contain the "reaction residue" of a second compound and the "reaction residue" a third compound if the first compound could be made by a chemical reaction between the second compound and the third compound. For example, an ester $R^1$-C(O)-O-$R^2$ is said to contain reaction residues of the acid $R^1$-C(O)-OH and the alcohol H-O-$R^2$.

When a ratio is said herein to be X:1 or greater, it is meant that the ratio is Y:1, where Y is greater than or equal to X. For example, if a ratio is said to be 3:1 or greater, that ratio may be 3:1 or 5:1 or 100:1 but may not be 2:1. Similarly, when ratio is said herein to be W:1 or less, it is meant that the ratio is Z:1, where Z is less than or equal to W. For example, if a ratio is said to be 15:1 or less, that ratio may be 15:1 or 10:1 or 0.1:1 but may not be 20:1.

Number-average molecular weight (Mn) and weight-average molecular weight (Mw) are measured by size exclusion chromatography. "Polydispersity" is the quotient of Mw divided by Mn.

A useful method of characterizing the amount of isocyanate groups in a composition is "%NCO," which is the total weight of all isocyanate groups present in the composition, divided by the total weight of the composition, expressed as a percentage.

An "alkylene oxide" has the structure

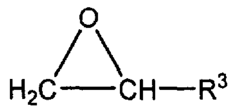

where $R^3$ is an alkyl group. A "higher-alkylene oxide" is an alkylene oxide in which $R^3$ is an alkyl group having one or more carbon atom. An -OH group is said herein to by "alkoxylated" if that -OH group has been reacted with an alkylene oxide to form an ether linkage and a new hydroxyl group as follows:

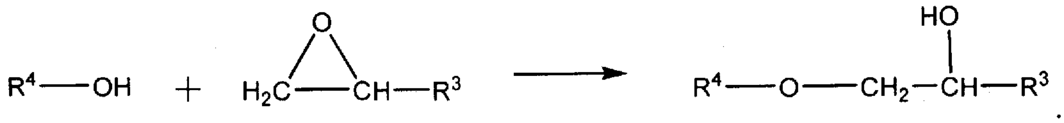

The newly-formed hydroxyl group could be alkoxylated one or more times; in such a case, the original -OH group would be said to have been alkoxylated with two or more reaction residues of the higher-alkylene oxide. The -OH group that may be alkoxylated may be pendant on an alcohol or polyol or may be the -OH portion of a carboxyl group. If an -OH group is alkoxylated with a higher-alkylene oxide, that -OH group is said to be "higher-alkoxylated." Any type of -OH group may be alkoxylated, including those that form primary alcohols, secondary alcohols, or tertiary alcohols, and those that form part of a carboxyl group.

A characteristic of a polyol is the hydroxyl number, which is measured according to ASTM D4274-11 (American Society for Testing and Materials, Conshohocken, PA, USA) and is reported in units of milligrams of KOH per gram (mgKOH/g). The hydroxyl numbers considered herein are reported without any acidity correction having been made. Another characteristic of a polyol is the acid number, which is measured using ASTM D974-12 and reported in units of mgKOH/g.

As used herein, a "film" is a material of any composition that is relatively small in one dimension, called the "thickness," in comparison to the other two dimensions. Films have thickness of 2 micrometer to 1 millimeter. The size of a film in each dimension other than the thickness is at least 100 times the thickness. Films are flexible; at 25°C; a film may be bent to a 90° angle at a radius of curvature of 1 cm without breaking. The "surface" of a film is the flat face of the film that is perpendicular to the thickness dimension.

The present invention involves forming a mixture of a component A and a component B. The two components are brought into contact with each other to form a mixture, and the mixture may be stirred or otherwise agitated or passed through a static mixture or exposed to other mixing techniques in order to effect intimate contact between component A and component B.

Component A contains a polyisocyanate, herein labeled "polyisocyanate A." Suitable polyisocyanates include one or more monomeric polyisocyanates, one or more polyisocyanate prepolymers, and mixtures thereof. Monomeric polyisocyanates include, for example, Diphenylmethane-4,4'-diisocyanate (4,4'-MDI), Diphenylmethane-2,4'-diisocyanate (2,4'-MDI), Diphenylmethane-2,2'-diisocyanate (2,2'-MDI), hydrogenated MDI (any isomer), toluylene-2,4-diisocyanate (2,4-TDI), toluylene-2,6-diisocyanate (2,6-TDI), naphthylene-1,5-diisocyanate, isophorone diisocyanate, hexan-1,6-diisocyanate, hexamethylene diisocyanate, meta-tetramethylxylylene diisocyanate, 2,2,4-trimethyl-hexamethylene diisocyanate, 2,4,4-trimethyl-hexamethylene diisocyanate, and mixtures thereof. Preferred monomeric polyisocyanates contain 2,4'-MDI, 4,4'-MDI, and mixtures thereof. Polyisocyanate prepolymers are reaction products of monomeric polyisocyanates with one or more polyol, one or more polyamine, or a combination thereof. Each polyisocyanate prepolymer has two or more pendant isocyanate groups. Preferred polyisocyanate prepolymers contain reaction products of one or more isomer of MDI with one or more polyether polyol, one or more polyester polyol, one or more hybrid polyol, or a mixture thereof. Preferably, in the formation of a polyisocyanate prepolymer, isocyanate groups react with hydroxyl groups to form urethane linkages.

Preferably, the polyisocyanate A contains one or more monomeric polyisocyanate and one or more polyisocyanate prepolymer. Preferably, the amount of monomeric polyisocyanate is, by weight based on the total weight of the polyisocyanate A, is 10% or more; more preferably 20% or more. Preferably, the amount of monomeric polyisocyanate is, by weight based on the total weight of the polyisocyanate A is 50% or less; more preferably 40% or less.

Preferably, the %NCO of polyisocyanate A is 5% or more; more preferably 8% or more. Preferably, the %NCO of polyisocyanate A is 30% or less; more preferably 20% or less.

Component B contains a hybrid polyol (herein labeled polyol "B"), which comprises reaction residues of (i), (ii), and (iii) defined herein above. This means that the hybrid polyol of the present invention contains one or more molecule in which one or more reaction residue of each of (i), (ii), and (iii) is covalently bound to that molecule. Preferably the number of molecules of the hybrid polyol of the present invention, on a molar basis, that contain reaction residues of (i), (ii), and (iii) is 50% or more; more preferably 75% or more; more preferably 90% or more.

The hybrid polyol of the present invention contains one or more molecule in which a reaction residue (ii) is attached by a covalent bond directly to a reaction residue (iii). Preferably the number of molecules of the hybrid polyol of the present invention, on a molar basis, in which a reaction residue (ii) is attached by a covalent bond directly to a reaction residue (iii) is 50% or more; more preferably 75% or more; more preferably 90% or more.

The hybrid polyol of the present invention comprises one reaction residue of an initiator polyol (i). The number-average molecular weight of the initiator polyol is 900 or lower; preferably 700 or lower; more preferably 500 or lower.

Preferably, the initiator polyol is an ether polyol. Preferably, the initiator polyol contains no ester linkage. Preferably, the initiator polyol contains no atom other than carbon, hydrogen, and oxygen.

Preferred initiator polyols include polyols having three hydroxyl groups from list "P" and alkoxylated versions thereof. List "P" consists of glycerin (also called glycerol), ethylene glycol, diethylene glycol, triethylene glycol, tetraethylene glycol, polyethylene glycols having number-average molecular weight of 500 or lower; dipropylene glycol, trimethylolethane, and trimethylolpropane. Among alkoxylated versions of List "P," preferred are those in which each hydroxyl group on the List "P" polyol is alkoxylated with 4 or fewer reaction residues of higher-alkylene oxide; more preferred is 3 or fewer moles; more preferred is two or fewer moles. Among alkoxylated versions of List "P," preferred are those in which the alkylene oxide has $R^3$ (as defined herein above) that is an alkyl group that has 6 or fewer carbon atoms; more preferably 3 or fewer carbon atoms; more preferably 1 carbon atom.

The hybrid polyol of the present invention contains one or more reaction residue of an anhydride (ii). Preferred anhydrides are maleic anhydride, succinic anhydride, phthalic anhydride, tetrahydrophthalic anhydride, and hexahydrophthalic anhydride; more preferred is phthalic anhydride.

A useful parameter is "MRPA," defined herein as the number of moles of reaction residues of anhydride per mole of reaction residue of initiator polyol. The mole ratio of reaction residues of anhydride to reaction residues of initiator polyol, is MRPA:1. In any one molecule of the hybrid polyol of the present invention, there will be one reaction residue of initiator polyol and an integer number of reaction residues of anhydride, and MRPA for that individual molecule with be an integer. The hybrid polyol may be a mixture of different molecules containing different numbers of reaction residues of anhydride; in such a case, MRPA for the hybrid polyol may not be an integer. MRPA:1 is from 1.0:1 to N:1, where N is the number of pendant hydroxyl groups on the initiator polyol. When the initial polyol has three pendant hydroxyl groups (i.e., when N=3), preferably MRPA:1 is from 1.0:1 to 1.5:1.

The hybrid polyol of the present invention contains one or more reaction residue of one or more alkylene oxide. A useful parameter is "MRAO," defined herein as the number of moles of reaction residues of alkylene oxide per mole of reaction residue of initiator polyol. The mole ratio of all reaction residues of all alkylene oxides to reaction residues of initiator polyol is abbreviated herein MRAO:1. The ratio MRAO:1 is preferably 20:1 or less; more preferably 10:1 or less; more preferably 6:1 or less. Preferably, MRAO:1 is 2.0:1 or greater; more preferably 4.0:1 or greater.

Preferably, the hybrid polyol of the present invention contains one or more reaction residue of one or more higher-alkylene oxide. Preferably, at least one reaction residue of an anhydride is attached directly to one reaction residue of a higher-alkylene oxide.

A useful characteristic of the hybrid polyol of the present invention is the length of the longest chain of adjacent reaction residues of alkylene oxide to be found in the molecule of the hybrid polyol, measured as the number of adjacent reaction residues of alkylene oxide, abbreviated herein as "LAO." Preferably, reaction residues of alkylene oxide molecules are adjacent in the molecule of the hybrid polyol as a result of an alkoxylation process as described herein above. Preferably, 50% or more on a mole basis of the molecules of hybrid polyol have an average LAO of 6 or lower; more preferably 4 or lower; more preferably 2 or lower.

A useful characteristic of the hybrid polyol of the present invention is the length of the longest chain of adjacent reaction residues of higher-alkylene oxide to be found in the molecule of the hybrid polyol, measured as the number of adjacent reaction residues of higher-alkylene oxide, abbreviated herein as "LHAO." Preferably, reaction residues of higher-alkylene oxide molecules are adjacent in the molecule of the hybrid polyol as a result of an alkoxylation process as described herein above. Preferably, 50% or more on a mole basis of the molecules of hybrid polyol have an average LHAO of 6 or lower; more preferably 4 or lower; more preferably 2 or lower.

The hybrid polyol of the present invention preferably has hydroxyl number, in units of mgKOH/g, of 100 or higher; more preferably 130 or higher; more preferably 200 or higher. The hybrid polyol of the present invention preferably has hydroxyl number, in units of mgKOH/g, of 325 or lower; more preferably 305 or lower.

The hybrid polyol of the present invention preferably has acid number, in units of mgKOH/g, of 0 to 5; more preferably 0 to 2; more preferably 0 to 1.

Preferably, the hybrid polyol of the present invention has Mn of 300 or higher; more preferably 400 or higher; more preferably 450 or higher. Preferably, the hybrid polyol of the present invention has Mn of 1,100 or lower; more preferably 750 or lower; more preferably 500 or lower.

Preferably, the hybrid polyol of the present invention has polydispersity of 1.01 or higher. Preferably, the hybrid polyol of the present invention has polydispersity of 1.4 or lower; more preferably 1.3 or lower; more preferably 1.25 or lower.

Preferably, most of the pendant hydroxyl groups on the hybrid polyol of the present invention are secondary hydroxyl groups. Preferably, the amount of molecules of the hybrid polyol of the present invention, on a molar basis, on which all of the pendant hydroxyl groups are secondary hydroxyl groups is 50% or more; more preferably 75% or more; more preferably 90% or more.

The molecule of the hybrid polyol of the present invention preferably does not contain any fatty (long chain aliphatic) residues. A fatty (long chain aliphatic) residue is a linear chain of 5 or more carbon atoms connected to each other by single or double bonds; the carbon atoms in a fatty (long chain aliphatic) residue are not part of any aromatic ring.

The mix ratio of the isocyanate A to the hybrid polyol is based upon the equivalent weight of the isocyanate A and the equivalent weight of the hybrid polyol. The equivalent weight of the isocyanate terminated resin is calculated from the % NCO for that component by the following equation:

$$\text{Equivalent Weight of Isocyanate A} = (42 * 100) / \%\ \text{NCO}$$

The equivalent weight of the hybrid polyol is calculated from the hydroxyl number (OHN) for that component by the following equation:

$$\text{Hydroxyl Equivalent Weight of hybrid polyol} = 56100 / \text{OHN}$$

The equivalents of each component is calculated from the weight of that component present in the mixture divided by that component's equivalent weight.

Preferably the mix ratio, on an equivalents basis, of isocyanate A to hybrid polyol is 1:1 or greater; more preferably 1.25:1 or greater; more preferably 1.43:1 or greater. Preferably the mix ratio, on an equivalents basis, of isocyanate A to hybrid polyol is 2:1 or less; more preferably 1.82:1 or less; more preferably 1.7:1 or less.

The adhesive composition of the present invention may optionally contain, in addition to polyisocyanate A and the hybrid polyol, one or more solvent, one or more adjuvant ingredient, or both. A solvent is a liquid having boiling point below 80°C that is capable of dissolving the polyisocyanate and the hybrid polyol. If a solvent is present, the ratio of the sum of the weight of the polyisocyanate plus the weight of the hybrid polyol to the weight of the solvent is preferably from 0.45:1 to 20:1. In some embodiments, no solvent is used.

Adjuvant ingredients may also be present in the adhesive composition of the present invention. For example, a catalyst may be present to promote the reaction between the polyisocyanate and the hybrid polyol to form urethane linkages.

The hybrid polyol of the present invention is preferably made by the following process, known herein as the "preferred process." Methods and catalysts that are useful for each of the steps in the preferred process may be found, for example, in US 2013/0035467.

In some embodiments of the preferred process, an initiator polyol is made by a process that includes the following optional "preliminary step." The preliminary step includes reacting a polyol from list "P" (defined herein above) with one or more higher-alkylene oxide in an alkoxylation reaction. If this preliminary step is performed, the result is considered the initiator polyol.

In the preferred process, after the preliminary step (if it is performed), the following "first step" is performed: the initiator polyol is reacted with anhydride.

As a result of the first step, preferably some or all of the pendant hydroxyl groups on the initiator polyol become "capped" by the anhydride. By "capped" is meant herein that one acid functionality of the anhydride reacts with the pendant hydroxyl group on the initiator polyol to form an ester linkage, and the other acid functionality of the anhydride becomes a carboxyl group. Preferably, on a molar basis, 30% to 100% of the hydroxyl groups on the initiator polyol become capped; more preferably 60% to 100%. Preferably, the first step does not form molecules in which more than one reaction residue of initiator polyol is present; for example, it is preferred that a chain is not formed in which reaction residues of anhydride alternate with reaction residues of initiator polyol. Preferably, the amount of the product of the first step, on a molar basis, that consists of molecules that contain exactly one reaction residue of initiator polyol is 50% or more; more preferably 80% or more; more preferably 95% or more.

In the preferred process, after the first step is performed, the following "second step" is performed. In the second step, the product of the first step is reacted with one or more higher-alkylene oxide. The second step is preferably conducted in the presence of a catalyst. Preferred catalysts include double metal cyanide (DMC) catalysts, tertiary amine catalysts, and superacid catalysts. More preferred are double metal cyanaide catalysts and superacid catalysts. The tertiary amine catalyst can be N-alkylalkanolamines, aminoalcohols, N,N-dialkylcyclohexylamines, alkylamines where the alkyl groups are methyl, ethyl, propyl, butyl and isomeric forms thereof, and heterocyclic amines. Non-limiting examples of tertiary catalysts are 1-methyl-imidazole, triethylamine, triisopropylamine, tributylamine, dimethylethanolamine, N,N-dimethylbenzylamine, and 2-ethyl-4-methyl-imidazole. Among superacid catalysts, preferred are perfluoroalkylsulfonic acids and other fluorine-containing sulfonic acids; more preferred is triflic acid.

Preferably, at the conclusion of the second step, most or all of the -OH groups that formed part of the carboxyl groups present have been alkoxylated by at least one reaction residue of a higher-alkyl oxide. Preferably, on a molar basis, the amount of molecules in the product of the second step in which every -OH group that had been part of a carboxyl group prior to the performance of the second step has been alkoxylated during the second step is 50% or more; more preferably 80% or more; more preferably 95% or more.

It is contemplated that the reaction product of the second step is the hybrid polyol of the present invention.

When contemplating hybrid polyols made by the preferred process, when considering the length of chains of adjacent reaction residues of higher-alkylene oxide in the molecule of the hybrid polyol, as discussed herein above, the length of such chains is to be determined by the relationship of the reaction residues to each other in the finished polyol. For example, the entire chain of adjacent reaction residues of higher-alkylene oxide may have been formed during a preliminary step, or the entire chain of adjacent reaction residues of higher-alkylene oxide may have been formed during the second step, or the chain may have been partially formed during a preliminary step and then extended during the second step.

A preferred use for the composition of the present invention is as a two-component laminating adhesive.

An adhesive is a material that is used to bond together two or more substrates. A two-component adhesive is a composition that is stored as two separate materials in two separate containers; the two materials are brought into contact with each other to form a mixture, and in a relatively short time (usually one hour or less), the mixture is brought into contact with one or more substrate. Then, in a relatively short time (usually one hour or less), an assembled article is formed in which a portion of the mixture is in contact with two or more substrates. After a period of time (called the curing time), the two original materials have reacted with each other to form a bond between the substrates.

A laminating adhesive is a composition that is capable of forming a bond between two relatively thin, flat substrates, when the adhesive composition exists as a relatively thin layer in contact with the two faces of the substrates. Preferred substrates, herein called "films," have thickness of 10 micrometers to 1 mm and have extent of at least 10 cm in each of the other two dimensions.

The compositions of preferred substrates are organic polymers, metallized organic polymers, and metal foil such as aluminum. Preferred organic polymers are polyesters, nylons, polyethylenes, polypropylenes, coextruded layers thereof, and blends thereof.

A "laminate" is an assembled article made of one film whose surface is in contact with a layer of an adhesive composition, which is in turn in contact with the surface of a second film. The layer of the adhesive may be continuous or discontinuous.

Film may be of any composition. Preferred compositions are polymers, metals, and metallized polymer films. Films made of metal are also sometimes called "foils." Film thickness is preferably 5 micrometer or more; more preferably 10 micrometers or more. Film thickness is preferably 0.5 millimeter or less; more preferably 0.2 millimeter or less. When a polymer film or the polymer surface of a metallized polymer film is intended to come into contact with the adhesive composition, it is preferred that that surface be corona discharge treated. Preferred polymers are polyethylene, polyethylene copolymers, polypropylene, polypropylene copolymers, polyesters, polyamides, oriented versions thereof, and coextruded layered films thereof.

The layer of adhesive composition may be applied to the surface of a first film by any method. If the layer of adhesive composition contains solvent, it is contemplated that the layer will be heated to evaporate the solvent prior to contact with the surface of the second film.

The laminate is optionally subjected to pressure, for example using nip rollers. The laminate is optionally heated to facilitate a chemical reaction between component A and component B.

In a laminate, the amount of the adhesive in the layer between the films is preferably 1.22 $g/m^2$ or more; more preferably 1.46 $g/m^2$ or more; more preferably 1.67 $g/m^2$ or more; more preferably 2.05 $g/m^2$ or more. In a laminate, the amount of the adhesive in the layer between the films is preferably 4.90 $g/m^2$ or less; more preferably 4.10 $g/m^2$ or less; more preferably 2.5 $g/m^2$ or less.

In a preferred method to form a laminate, a layer of recently-formed mixture of polyisocyanate and hybrid polyol is applied to one substrate, optionally the layer of adhesive is dried, a second substrate is brought into contact with the layer of adhesive to form an assembled article, and the assembled article is put under pressure, for example by passing between rollers. The assembled article is then stored at a temperature of preferably from 18°C to 55°C, more preferably 25°C to 45°C, more preferably 25°C to 30°C.

The following are examples of the present invention.

In the following examples, the following polyisocyanates were used.

Polyisocyanate I: 69.0 to 71.0% isocyanate terminated polyurethane resin, and 29.0 - 31.0% of a combination of Methylenebis (4-phenyl isocyanate), Isocyanato-2-[(4-isocyanatophenyl) methyl] benzene and Methylenebis (2-isocyanato) benzene with a %NCO of 13.0%. Percentages are by weight based on the weight of Polyisocyanate I. All formulations based upon Polyisocyanate I were cured at ambient temperature (approximately 25°C).

Polyisocyanate II: ≥ 95.0% Isocyanate terminated prepolymer and ≤ 0.20% hexamethylene diisocyanate with a %NCO of 21.8 ± 0.3%. All formulations based upon Polyisocyanate II were cured at ca. 45-46°C.

The hybrid polyols of the present invention are referred to herein below as "polyester-polyether" polyols. The following characteristics of the polyols were measured.

Hydroxyl number ("OH number") was measured as potassium hydroxide (KOH) mg/g, according to protocol of ASTM D4274D.

Acid number was measured as potassium hydroxide (KOH) mg/g according and determined by potentiometric titration of a methanolic solution of the sample with standard methanolic KOH solution (0.01 N: certified, available from Fisher Scientific).

Total unsaturation was measured as meq/g, according to ASTM D4671.

Water % wt was measured according to ASTM E203.

Total volatiles was measured by head space analysis at 225°C.

Viscosity was measured according to ASTM D455 and Cone-Plate: ISO 3219.

Density was measured by utilizing a Calculating Digital Density Meter MDA 4500.

pH (1 $H_2O$ + 10 MeOH) - Apparent pH, measured using a standard pH meter after addition of 10 g of sample to 60 mL of neutralized water- methanol (1:10 water:methanol by weight) solution.

The $^{13}C$ NMR spectrum of each polyol was obtained. From analysis of that spectrum, several characteristics were determined. First, the nature of the initial polyol (or the list P polyol used in making the initial polyol) was verified. Second, the number of reaction residues of each of the following per molecule of polyol was determined: phthalic anhydride (PA), and propylene oxide (PO). Where two numbers are reported for PO, the first represents the number of PO residues attached to the list P polyol to make the initial polyol, and the second number represents the number of PO residues that were attached to the polyol after the phthalic anhydride had reacted with the initial polyol.

The proportion of primary and secondary hydroxyl groups was determined by analysis of the $^{13}C$ NMR employing the method of F. Heatley, et.al., Macromolecules, 21(9), 2713- 2721 (1988

Size Exclusion Chromatography (abbreviated below as "GPC") was measured at room temperature using a standard polyol mixture of VORANOL™ CP6001 + VORANOL™ CP4100 + VORANOL™ CP1000 (triol glycerine based polypropylene polyols having Mn = 6000, 4100, 2000, and 1000 Da, from the Dow Chemical Company). Calculation is based on the narrow standard method.

Example 1: Hybrid Polyol Synthesis

295.6 g (2.79 mol) Diethylene Glycol (DEG) and 825.4 g (5.58 mol) phthalic anhydride were mixed in 5 L stainless steel alkoxylation reactor. The reaction mixture was flushed 10 times with 6 bar (600 kPa) nitrogen ($N_2$) pressure without stirring. The reactor was thermostated at 120°C with 6 bar of $N_2$ pressure. Initially the solid reactor content gradually dissolves in the reactor, becoming mainly liquid after 0.5 Hr at this temperature. Stirring was switched on, gradually increasing the stirring rate from 50 to 200 rpm. The reactor content was stirred for an additional 1.5 Hr., the reactor temperature was increased to 130°C. The $N_2$ pressure in the reactor was reduced to 1.0 bar, and the stirring rate was increased to 300 rpm. 0.0547 g of DMC catalyst was added to the resin and 200.0 g of propylene oxide was fed to the reactor at a feed rate of 15 g/min over 13 mins. The immediate reaction start was accompanied by an exotherm. At the completion of the feed the total pressure in the reactor has reached 4.3 bar. At this point stirring rate in the reactor was increased to 700 rpm; reactor content was stirred in these conditions for 1 hr. Only very slow consumption rate of oxide was observed. Propylene oxide was vented off; reaction mixture was flushed 10 times with 6 bar nitrogen pressure, followed by vacuum flashing at 100°C for 5 mins. Reactor was opened and 0.0547 g of DMC catalyst was added. Reactor was closed and flushed 10 times with 6 bar nitrogen pressure with stirring at 150 rpm. Reactor was thermostated at 120°C. Vacuum was applied to the reactor in order to bring pressure inside to below 1 mbar. Vacuum line was closed; 200 g of propylene oxide was added at 15 g / min to vacuumized reactor to establish propylene oxide of 4.3 bar. At this point stirring rate in the reactor was increased to 700 rpm, reactor content was stirred in these conditions for 1 Hr. Again, only very slow consumption rate of oxide was observed. Propylene oxide was vented off; reaction mixture was flushed 10 times with 6 bar nitrogen pressure, followed by vacuum flashing at 100°C for 5 mins. Reactor was opened and an additional 0.0547 g of DMC catalyst was added. Reactor was closed and flushed 10 times with 6 bar nitrogen pressure with stirring at 150 rpm. Reactor was thermostated at 120°C. Vacuum was applied to the reactor in order to bring pressure inside to below 1 mbar. Vacuum line was closed; 200 g of propylene oxide was added at a rate of 15 g / mins to vacuumized reactor to establish propylene oxide pressure of 4.3 bar. At this point stirring rate in the reactor was increased to 700 rpm. 23 mins after the end of propylene oxide feed a strong exotherm (120 to 155°C) was observed, propylene oxide pressure in the reactor dropped abruptly to below 0.3 bar in less than a minute. At this point catalyst was activated;

remaining 563 g of propylene oxide was added to the reactor at the feed rate of 15 g / min within 37 mins. During this feed state equilibrium propylene oxide pressure was established at 0.71 bar. 30 min digestion time was allowed upon the end of the feed. The product was flushed 10 times with 6 bar nitrogen pressure, followed by vacuum stripping at 100°C for 30 mins. Colorless liquid was obtained, containing 93 weight ppm DMC end-batch concentration. Temperature of the reactor was lowered down to 80°C. The product was tapped off hot and collected into a plastic container.

The produced hybrid polyester-polyether polyol has the following properties: OH value: 111 mg KOH/g; Acid number: 0.24 mg KOH/g; Total unsaturation: 0.0018 meq/g; Water: 140 ppm; Total volatiles 85 ppm; Viscosity at 25°C: 3680 mPa.s; Viscosity at 50°C: 401 mPa.s; Viscosity at 100°C: 34.9 mPa.s; Density at 25°C: 1.116 g/cm$^3$; $^{13}$C-NMR: DEG+2.0 PA+10.9 PO, Mn=1032 Da; Primary OH: 4.5% of total OH, Secondary OH: 95.5% of total OH; GPC: Mn=760 g/mol, Mw/Mn=1.08.

Example 2: Hybrid Polyol Synthesis

601.10 g (5.89 mol) DEG and 1744.34 g (11.79 mol) phthalic anhydride are mixed in 5 L stainless steel alkoxylation reactor. The reaction mixture was flushed 10 times with 6 bar (600 kPa) nitrogen ($N_2$) pressure without stirring. The reactor was thermostated at 120°C with 6 bar of $N_2$ pressure. Initially the solid reactor content gradually dissolves in the reactor, becoming mainly liquid after 0.5 h at this temperature. Stirring was switched on, gradually increasing the stirring rate from 50 to 200 rpm. The reactor content was stirred for an additional 1.5 h. The reactor temperature was increased to 130°C. The $N_2$ pressure in the reactor was reduced to 1.0 bar, and the stirring rate was increased to 300 rpm. 0.0592 g of DMC catalyst was added to the resin and 180.0 g of propylene oxide was fed to the reactor at a feed rate of 15 g/min over 12 mins. The immediate reaction start was accompanied by an exotherm. At the completion of the feed the total pressure in the reactor has reached 3.0 bar. At this point stirring rate in the reactor was increased to 700 rpm; reactor content was stirred in these conditions for 1 hr. Only very slow consumption rate of oxide was observed. Propylene oxide was vented off; reaction mixture was flushed 10 times with 6 bar nitrogen pressure, followed by vacuum flashing at 100°C for 5 mins. Reactor was opened and 0.0592 g of DMC catalyst was added. Reactor was closed and flushed 10 times with 6 bar nitrogen pressure with stirring at 150 rpm. Reactor was thermostated at 120°C. Vacuum was applied to the reactor in order to bring pressure inside to below 1 mbar. Vacuum line was closed; 180 g of propylene oxide was added at 15 g / min to vacuumized reactor to establish propylene oxide of 3.0 bar. At this point stirring rate in the reactor was increased to 700 rpm, reactor content was stirred in these conditions for 1 Hr. Again, only very slow consumption rate of oxide was observed. Propylene oxide was vented off; reaction mixture was flushed 10 times with 6 bar nitrogen pressure, followed by vacuum flashing at 100°C for 5 mins. Reactor was opened and an additional 0.0592 g of DMC catalyst was added. Reactor was closed and flushed 10 times with 6 bar nitrogen pressure with stirring at 150 rpm. Reactor was thermostated at 120°C. Vacuum was applied to the reactor in order to bring pressure inside to below 1 mbar. Vacuum line was closed; 180 g of propylene oxide was added at a rate of 15 g / mins to vacuumized reactor to establish propylene oxide pressure of 3.0 bar. At this point stirring rate in the reactor was increased to 700 rpm. 23 mins after the end of propylene oxide feed a strong exotherm (120 to 134°C) was observed, propylene oxide pressure in the reactor dropped from 2.4 bar to below 0.3 bar in 6 minutes. At this point catalyst was activated; 30 min digestion time was allowed. The product was flushed 10 times with 6 bar nitrogen pressure, followed by vacuum stripping at 100°C for 30 mins. Colorless liquid was obtained, containing 77 weight ppm DMC end-batch concentration. Temperature of the reactor was lowered down to 80°C. The product was tapped off hot and collected into a plastic container.

The produced hybrid polyester-polyether polyol has the following properties: OH value: 174 mg KOH/g; Acid number: 1.32 mg KOH/g; Total unsaturation: 0.002 meq/g; Water: 230 ppm; Total volatiles 142 ppm; Viscosity at 50°C: 2054 mPa.s; Viscosity at 75°C: 860 mPa.s; Viscosity at 100°C: 76 mPa.s; Density at 25°C: 1.190 g/ cm$^3$; $^{13}$C -NMR: DEG+2.0 PA+4.4 PO, Mn=660 Da; Primary OH: 30.0% of total OH, Secondary OH: 70.0% of total OH; GPC: Mn=443 g/mol, Mw/Mn=1.12.

Example 3: Hybrid Polyol Synthesis

500.0 g (4.71 mol) DEG and 1408.0 g (9.42 mol) phthalic anhydride are mixed in 5 L stainless steel alkoxylation reactor. The reaction mixture was flushed 10 times with 6 bar (600 kPa) nitrogen ($N_2$) pressure without stirring. The reactor was thermostated at 110°C with 6 bar of $N_2$ pressure. Initially the solid reactor content gradually dissolves in the reactor, becoming mainly liquid after 0.5 h at this temperature. Stirring was switched on, gradually increasing the stirring rate from 50 to 200 rpm. The reactor content was stirred for an additional 1.5 h. The reactor temperature was increased to 130°C. The $N_2$ pressure in the reactor was reduced to 1.0 bar, and the stirring rate was increased to 300 rpm. PO (1095.0 g, 18.85 mol) was fed to the reactor at a feed rate of 15 g/min over 75 min. The immediate reaction start was accompanied by an exotherm. At the completion of the feed the total pressure in the reactor has reached 5.1 bar (510 kPa). 2.0 h of additional digestion time was allowed. The total pressure in the reactor decreases to 4.0 bar (400 kPa). A 285.0 g sample was taken with help of vacuumized steel bomb, connected to the bottom valve of the reactor. The

sample was transferred into a glass flask and stripped off unreacted PO in vacuum with stirring for 0.5 h at 100°C. Solid DMC catalyst (0.959 g) was dispersed in 274.0 g of the polyol taken from the stripped sample, as described above, using an IKA Ultra Turrax T25 blender at 10000 rpm for 5 min in a dry bag. The dispersion contains 3490 ppm of the DMC catalyst. Reactor was thermostated at 130°C. 68.1 g of the DMC catalyst dispersion, prepared as described above, was injected into the reactor with the help of a pressurized stainless steel bomb, connected to the reactor, followed by a feed of additional 100 g of PO at a feed rate of 30 g/min. Reactor content was stirred for 1.0 h. No DMC catalyst activation was observed. Additional 73.7 g of the DMC catalyst dispersion was injected into the reactor. Reactor content was stirred for an additional 1.0 h. No catalyst activation was observed. Additional 70.2 g of the DMC catalyst dispersion was injected into the reactor, followed by a feed of additional 100 g of PO at 30 g/min. Reactor content was stirred for an additional 1.0 h. No catalyst activation was observed. Additional 60.1 g of the DMC catalyst dispersion was injected into the reactor, followed by a feed of additional 100 g of PO at 30 g/min. Smooth DMC catalyst activation, accompanied by a pressure drop in the reactor and an exotherm, was observed within 15 min following completion of the feed. Additional 790 g (13.60 mol) of PO are fed to the reactor at 30 g/min. Upon the end of the feed, 1.0 h of digestion time was allowed. The product was stripped in vacuum for 1 h at 120°C. A colorless viscous liquid was obtained.

The produced hybrid polyester-polyether polyol has the following properties: OH value: 129 mg KOH/g; Acid number: 0.1 mg KOH/g; Total unsaturation: 0.0052 meq/g; Water: 190 ppm; Total volatiles 80 ppm; Viscosity at 25°C: 6010 mPa.s; Viscosity at 50°C: 595 mPa.s; Viscosity at 75°C: 114 mPa.s; Viscosity at 100°C: 37 mPa.s; Density at 60°C: 1.103 g/ $cm^3$; Density at 25°C: 1.127 g/ $cm^3$; $^{13}C$ -NMR: DEG+2.0 PA+8.0 PO, Mn=869 Da; Primary OH: 12.6% of total OH, Secondary OH: 87.4% of total OH; GPC: Mn=670 g/mol, Mw/Mn=1.15.

Example 4: Hybrid Polyol Synthesis

762.1 g (3.92 mol) Tetraethylene Glcyol (TEG) and 1162.5 g (7.85 mol) phthalic anhydride are mixed in 5 L stainless steel alkoxylation reactor. The reaction mixture was flushed 10 times with 6 bar (600 kPa) nitrogen ($N_2$) pressure without stirring. The reactor was thermostated at 110°C with 6 bar of $N_2$ pressure. Initially the solid reactor content gradually dissolves in the reactor, becoming mainly liquid after 0.5 h at this temperature. Stirring was switched on, gradually increasing the stirring rate from 50 to 200 rpm. The reactor content was stirred for an additional 1.5 h. The reactor temperature was increased to 130°C. The $N_2$ pressure in the reactor was reduced to 1.0 bar, and the stirring rate was increased to 300 rpm. PO (820.0 g, 14.12 mol) was fed to the reactor at a feed rate of 15 g/min over 55 min. The immediate reaction start was accompanied by an exotherm. At the completion of the feed the total pressure in the reactor has reached 4.9 bar (490 kPa). 3.0 h of additional digestion time was allowed. The total pressure in the reactor decreases to 3.8 bar (380 kPa). A 170.0 g sample was taken with help of vacuumized steel bomb, connected to the bottom valve of the reactor. The sample was transferred into a glass flask and stripped off unreacted PO in vacuum with stirring for 0.5 h at 100°C. Solid DMC catalyst (0.473 g) was dispersed in 155.0 g of the polyol taken from the stripped sample, as described above, using an IKA Ultra Turrax T25 blender at 10000 rpm for 5 min in a dry bag. The dispersion contains 3040 ppm of the DMC catalyst. Reactor was thermostated at 140°C. 65.0 g of the DMC catalyst dispersion, prepared as described above, was injected into the reactor with the help of a pressurized stainless steel bomb, connected to the reactor, followed by a feed of 180 g of PO at 30 g/min. Reactor content was stirred for 1.0 h. No DMC catalyst activation was observed. Additional 40.0 g of the DMC catalyst dispersion was injected into the reactor, followed by a feed of additional 100 g of PO at 30 g/min. Reactor content was stirred for an additional 1.0 h. No catalyst activation was observed. Additional 50.0 g of the DMC catalyst dispersion was injected into the reactor, followed by a feed of additional 100 g of PO at 30 g/min. Smooth DMC catalyst activation, accompanied by a pressure drop in the reactor and an exotherm, was observed within 10 min following completion of the feed. Additional 165 g (2.84 mol) of PO are fed to the reactor at 30 g/min. Upon the end of the feed, 1.0 h of digestion time was allowed. A colorless viscous liquid was obtained.

The produced hybrid polyester-polyether polyol has the following properties: OH value: 141 mg KOH/g; Acid number: 0.1 mg KOH/g; Total unsaturation: 0.023 meq/g; Water: 120 ppm; Total volatiles 5694 ppm; Viscosity at 25°C: 6030 mPa.s; Viscosity at 50°C: 586 mPa.s; Viscosity at 75°C: 112 mPa.s; Viscosity at 100°C: 27 mPa.s; Density at 25°C: 1.160 g/ $cm^3$; Density at 60°C: 1.132 g/ $cm^3$; $^{13}C$ -NMR: TEG+2.0 PA+5.9 PO, Mn=834 Da; Primary OH: 12.9% of total OH, Secondary OH: 87.1% of total OH; GPC: Mn=580 g/mol, Mw/Mn=1.12.

Example 5: Hybrid Polyol Synthesis

768.2 g (3.96 mol) TEG and 0.79 g of a 10% solution of triflic acid (25 ppm Triflic Acid (TFA) based on the weight of product) in ethanol are placed in 5 L stainless steel alkoxylation reactor. The reactor was closed and thermostated at 100°C with 2.2 bar of $N_2$ pressure with 250 rpm stirring. The reactor content was stripped in vacuum for 0.5 h at 100°C. Vacuum line was closed and EO (523.0 g, 11.87 mol) was fed to the reactor at a feed rate of 10.5 g/min over 50 min. The immediate reaction start was accompanied by a strong exotherm. Upon the end of this feed, 0.5 h of additional

digestion time was allowed. Stirring rate was decreased to 50 rpm. Reactor was flushed 10 times with 6 bar (600 kPa) nitrogen ($N_2$) pressure. 1172.4 g (7.92 mol) phthalic anhydride, 0.04 g (0.29 mmol) $K_2CO_3$ and 0.16 g of 2-Ethyl-4-Methyl-Imidazole (EMI) (50 ppm based on the weight of product) are added to the reactor. The reaction mixture was flushed 10 times with 6 bar (600 kPa) nitrogen ($N_2$) pressure. The reactor was thermostated at 100°C with 6 bar of $N_2$ pressure with 50 rpm stirring. Initially the solid reactor content gradually dissolves in the reactor, becoming mainly liquid after 0.5 h at this temperature. Stirring rate was gradually increased from 50 to 250 rpm. The reactor content was stirred for additional 0.5 h. Reactor temperature was increased to 130°C. The reactor content was stirred for additional 1 h. The $N_2$ pressure in the reactor was reduced to 1.0 bar. PO (749.0 g, 12.90 mol) was fed to the reactor at a feed rate of 11.5 g/min over 65 min. The immediate reaction start was accompanied by an exotherm. At the completion of the feed the total pressure in the reactor has reached 4.9 bar (490 kPa). 3.5 h of additional digestion time was allowed. The total pressure in the reactor decreases to 2.5 bar (250 kPa). The reactor temperature was decreased to 100°C. 4.59 g of a 10% solution of triflic acid (TFA, 142 ppm based on the weight of product) in ethanol was injected into the reactor with the help of a pressurized stainless steel bomb, connected to the reactor. Immediate pressure drop in the reactor and an exotherm are observed. 20 min of additional digestion time was allowed. Potassium hydroxide (4.73 g, 0.5 mol/l solution in ethanol) was injected into the reactor with the help of a pressurized stainless steel bomb, connected to the reactor, in order to neutralize the remaining triflic acid. The product was then stripped in vacuum for 2 h at 120°C. A colorless viscous liquid was obtained.

The produced hybrid polyester-polyether polyol has the following properties: OH value: 136 mg KOH/g; Acid number: 2.1 mg KOH/g; Total unsaturation: 0.0072 meq/g; Water: 160 ppm; Total volatiles 229 ppm; Viscosity at 25°C: 8920 mPa.s; Viscosity at 50°C: 971 mPa.s; Viscosity at 75°C: 206 mPa.s; Viscosity at 100°C: 95 mPa.s; Density at 25°C: 1.196 g/ $cm^3$; Density at 60°C: 1.167 g/ $cm^3$; $^{13}C$ -NMR: TEG+3.0 EO+2.0 PA+2.8 PO, Mn=785 Da; Primary OH: 42.6% of total OH, Secondary OH: 57.4% of total OH; GPC: Mn=570 g/mol, Mw/Mn=1.23.

Example 6: Hybrid Polyol Synthesis

473.8 g (3.53 mol) Dipropylene Glycol (DPG) and 1046.1 g (7.06 mol) phthalic anhydride are mixed in 5 L stainless steel alkoxylation reactor. The reaction mixture was flushed 10 times with 6 bar (600 kPa) nitrogen ($N_2$) pressure without stirring. The reactor was thermostated at 130°C with 6 bar of $N_2$ pressure. Initially the solid reactor content gradually dissolves in the reactor, becoming mainly liquid after 0.5 h at this temperature. Stirring was switched on, gradually increasing the stirring rate from 50 to 200 rpm. The reactor content was stirred for an additional 2.5 h. The $N_2$ pressure in the reactor was reduced to 1.0 bar, and the stirring rate was increased to 300 rpm. PO (820.0 g, 14.12 mol) was fed to the reactor at a feed rate of 13 g/min over 65 min. The immediate reaction start was accompanied by an exotherm. At the completion of the feed the total pressure in the reactor has reached 4.8 bar (480 kPa). 15.0 h of additional digestion time was allowed. The total pressure in the reactor decreases to 1.8 bar (180 kPa). A 94.0 g sample was taken with help of vacuumized steel bomb, connected to the bottom valve of the reactor. The sample was transferred into a glass flask and stripped off unreacted PO in vacuum with stirring for 10 min at 100°C. Solid DMC catalyst (0.312 g) was dispersed in 83.7 g of the polyol taken from the stripped sample, as described above, using an IKA Ultra Turrax T25 blender at 10000 rpm for 5 min in a dry bag. The dispersion contains 3700 ppm of the DMC catalyst. Reactor was thermostated at 140°C. 31.6 g of the DMC catalyst dispersion, prepared as described above, was injected into the reactor with the help of a pressurized stainless steel bomb, connected to the reactor, followed by a feed of 100 g of PO at 30 g/min. Reactor content was stirred for 1.0 h. No DMC catalyst activation was observed. Additional 30.6 g of the DMC catalyst dispersion was injected into the reactor. Smooth DMC catalyst activation, accompanied by a pressure drop in the reactor and an exotherm, was observed within 10 min following completion of the feed. Additional 709 g (12.21 mol) of PO are fed to the reactor at 30 g/min. Upon the end of the feed, 1.0 h of digestion time was allowed. A colorless viscous liquid was obtained.

The produced hybrid polyester-polyether polyol has the following properties: OH value: 133 mg KOH/g; Acid number: 0.3 mg KOH/g; Total unsaturation: 0.0079 meq/g; Water: 180 ppm; Total volatiles 1425 ppm; Viscosity at 25°C: 10200 mPa.s; Viscosity at 50°C: 839 mPa.s; Viscosity at 75°C: 143 mPa.s; Viscosity at 100°C: 54 mPa.s; Density at 25°C: 1.123 g/ $cm^3$; Density at 60°C: 1.095 g/ $cm^3$; $^{13}C$ -NMR: DPG+2.0 PA+8.2 PO, Mn=904 Da; Primary OH: 14.0% of total OH, Secondary OH: 86.0% of total OH; GPC: Mn=650 g/mol, Mw/Mn=1.11.

Example 7: Hybrid Polyol Synthesis

590.8 g (4.40 mol) DPG and 0.71 g of a 10% solution of triflic acid (18 ppm TFA based on the weight of product) in ethanol are placed in 5 L stainless steel alkoxylation reactor. The reactor was closed and thermostated at 100°C with 1 bar of $N_2$ pressure with 200 rpm stirring. The reactor content was stripped in vacuum for 0.5 h at 100°C. Vacuum line was closed, stirring rate was increased to 400 rpm and PO (511.5 g, 8.81 mol) was fed to the reactor at a feed rate of 15 g/min over 35 min. The immediate reaction start was accompanied by a strong exotherm. Upon the end of this feed,

0.5 h of additional digestion time was allowed. Stirring rate was decreased to 50 rpm. Reactor was flushed 10 times with 6 bar (600 kPa) nitrogen ($N_2$) pressure. 1305.3 g (8.81 mol) phthalic anhydride and 0.04 g (0.29 mmol) $K_2CO_3$ are added to the reactor. The reaction mixture was flushed 10 times with 6 bar (600 kPa) nitrogen ($N_2$) pressure. The reactor was thermostated at 100°C with 6 bar of $N_2$ pressure with 50 rpm stirring. Initially the solid reactor content gradually dissolves in the reactor, becoming mainly liquid after 0.5 h at this temperature. Stirring rate was gradually increased from 50 to 100 rpm. The reactor content was stirred for additional 16 h. The $N_2$ pressure in the reactor was reduced to 1.0 bar, temperature was increased to 130°C and the stirring rate was increased to 400 rpm. PO (1074.3 g, 18.50 mol) was fed to the reactor at a feed rate of 11 g/min over 100 min. The immediate reaction start was accompanied by an exotherm. At the completion of the feed the total pressure in the reactor has reached 4.9 bar (490 kPa). 4.5 h of additional digestion time was allowed. The total pressure in the reactor decreases to 2.7 bar (270 kPa). A 468.0 g sample was taken with help of vacuumized steel bomb, connected to the bottom valve of the reactor. The sample was transferred into a glass flask and stripped off unreacted PO in vacuum with stirring for 0.5 h at 100°C. Solid DMC catalyst (0.753 g) was dispersed in 270.0 g of the polyol taken from the stripped sample, as described above, using an IKA Ultra Turrax T25 blender at 14000 rpm for 15 min in a dry bag. The dispersion contains 2780 ppm of the DMC catalyst. Reactor was thermostated at 140°C. 84.8 g of the DMC catalyst dispersion, prepared as described above, was injected into the reactor with the help of a pressurized stainless steel bomb, connected to the reactor, followed by feed of an additional 100 g of PO at a feed rate of 30 g/min. Reactor content was stirred for 1.0 h. No DMC catalyst activation was observed. Additional 82.4 g of the DMC catalyst dispersion was injected into the reactor, followed by feed of additional 100 g of PO at 30 g/min. Reactor content was stirred for additional 1.0 h. No catalyst activation was observed. An additional 84.8 g of the DMC catalyst dispersion was injected into the reactor, followed by feed of additional 100 g of PO at 30 g/min. Smooth DMC catalyst activation, accompanied by a pressure drop in the reactor and an exotherm, was observed within 20 min following completion of the feed. Additional 66 g of PO are fed to the reactor at 30 g/min. Additional 1.0 h of digestion time was allowed. The product was stripped in vacuum for 1 h at 120°C. A colorless viscous liquid was obtained.

The produced hybrid polyester-polyether polyol has the following properties: OH value: 136 mg KOH/g; Acid number: 0.6 mg KOH/g; Total unsaturation: 0.006 meq/g; Water: 260 ppm; Total volatiles 280 ppm; Viscosity at 25°C: 12800 mPa.s; Viscosity at 50°C: 1010 mPa.s; Viscosity at 75°C: 144 mPa.s; Viscosity at 100°C: 35 mPa.s; Density at 60°C: 1.100 g/ $cm^3$; Density at 25°C: 1.129 g/ $cm^3$; $^{13}C$ -NMR: DPG+2.0 PA+7.5 PO, Mn=866 Da; Primary OH: 23.3% of total OH, Secondary OH: 76.7% of total OH; GPC: Mn=610 g/mol, Mw/Mn=1.18.

Example 8: Hybrid Polyol Synthesis

1732.3 g (4.08 mol) of VORANOL* P400 diol polyether polyol, 1207.5 g (8.15 mol) phthalic anhydride and 0.20 g of EMI (50 ppm based on the weight of product) are mixed with stirring at 50 rpm in 5 L stainless steel alkoxylation reactor. The reaction mixture was flushed 10 times with 6 bar (600 kPa) nitrogen ($N_2$) pressure. The reactor was thermostated at 130°C with 6 bar of $N_2$ pressure. The obtained slurry gradually dissolves in the reactor, becoming mainly liquid after 0.5 h at this temperature. The stirring rate was gradually increased from 50 to 200 rpm. The reactor content was stirred for an additional 2.5 h. The $N_2$ pressure in the reactor was reduced to 1.0 bar, and the stirring rate was increased to 300 rpm. PO (758.0 g, 13.05 mol) was fed to the reactor at a feed rate of 14 g/min over 55 min. The immediate reaction start was accompanied by an exotherm. At the completion of the feed the total pressure in the reactor has reached 5.1 bar (510 kPa). 3.5 h of additional digestion time was allowed. The total pressure in the reactor decreases to 2.9 bar (290 kPa). The reactor temperature was decreased to 100°C. 5.37 g of a 10% solution of triflic acid (TFA, 145 ppm based on the weight of product) in ethanol was injected into the reactor with the help of a pressurized stainless steel bomb, connected to the reactor. Immediate pressure drop in the reactor and an exotherm are observed. 20 min of additional digestion time was allowed. Potassium hydroxide (7.15 g, 0.5 mol/l solution in ethanol) was injected into the reactor with the help of a pressurized stainless steel bomb, connected to the reactor, in order to neutralize the remaining triflic acid. The product was then stripped in vacuum for 1 h at 120°C. A colorless viscous liquid was obtained.

The produced hybrid polyester-polyether polyol has the following properties: OH value: 126 mg KOH/g; Acid number: 4.9 mg KOH/g; Total unsaturation: 0.0079 meq/g; Water: 250 ppm; Total volatiles 393 ppm; Viscosity at 25°C: 13900 mPa.s; Viscosity at 50°C: 1110 mPa.s; Viscosity at 75°C: 168 mPa.s; Viscosity at 100°C: 47 mPa.s; Density at 25°C: 1.122 g/ $cm^3$; Density at 60°C: 1.093 g/ $cm^3$; $^{13}C$ -NMR: DPG+5.0 PO+2.0 PA+2.8 PO, Mn=885 Da; Primary OH: 33.6% of total OH, Secondary OH: 66.4% of total OH; GPC: Mn=660 g/mol, Mw/Mn=1.20.

Example 9: Hybrid Polyol Synthesis

1772.2 g (4.17 mol) of VORANOL* P400 diol polyether polyol and 617.6 g (4.17 mol) phthalic anhydride are mixed with stirring at 50 rpm in 5 L stainless steel alkoxylation reactor. The reaction mixture was flushed 10 times with 6 bar (600 kPa) nitrogen ($N_2$) pressure. The reactor was thermostated at 130°C with 6 bar of $N_2$ pressure. The obtained slurry gradually dissolves in the reactor, becoming mainly liquid after 0.5 h at this temperature. The stirring rate was

gradually increased from 50 to 200 rpm. The reactor content was stirred for an additional 1.5 h. The $N_2$ pressure in the reactor was reduced to 1.0 bar, and the stirring rate was increased to 300 rpm. PO (588.0 g, 10.12 mol) was fed to the reactor at a feed rate of 6.5 g/min over 90 min. The immediate reaction start was accompanied by an exotherm. At the completion of the feed the total pressure in the reactor has reached 5.4 bar (540 kPa). 17.0 h of additional digestion time was allowed. The total pressure in the reactor decreases to 3.4 bar (340 kPa). A 276.0 g sample was taken with help of vacuumized steel bomb, connected to the bottom valve of the reactor. The sample was transferred into a glass flask and stripped off unreacted PO in vacuum with stirring for 10 min at 100°C. Solid DMC catalyst (0.646 g) was dispersed in 266.1 g of the polyol taken from the stripped sample, as described above, using an IKA Ultra Turrax T25 blender at 10000 rpm for 5 min in a dry bag. The dispersion contains 2420 ppm of the DMC catalyst. Reactor was thermostated at 140°C. 54.1 g of the DMC catalyst dispersion, prepared as described above, was injected into the reactor with the help of a pressurized stainless steel bomb, connected to the reactor, followed by a feed of 50 g of PO at 30 g/min. Reactor content was stirred for 1.0 h. No DMC catalyst activation was observed. Additional 48.6 g of the DMC catalyst dispersion was injected into the reactor. Reactor content was stirred for 1.0 h. No DMC catalyst activation was observed. Additional 48.7 g of the DMC catalyst dispersion was injected into the reactor. Reactor content was stirred for 1.0 h. No DMC catalyst activation was observed. Additional 50.3 g of the DMC catalyst dispersion was injected into the reactor, followed by a feed of 55 g of PO at 30 g/min. Reactor content was stirred for 1.0 h. No DMC catalyst activation was observed. Additional 51.0 g of the DMC catalyst dispersion was injected into the reactor, followed by a feed of 95 g of PO at 30 g/min. Smooth DMC catalyst activation, accompanied by a pressure drop in the reactor and an exotherm, was observed within 10 min following completion of the feed. Additional 267 g (4.60 mol) of PO are fed to the reactor at 30 g/min. Upon the end of the feed, 0.5 h of digestion time was allowed. The product was then stripped in vacuum for 0.5 h at 100°C. A colorless viscous liquid was obtained.

The produced hybrid polyester-polyether polyol has the following properties: OH value: 141 mg KOH/g; Acid number: 0.1 mg KOH/g; Total unsaturation: 0.0081 meq/g; Water: 110 ppm; Total volatiles 340 ppm; Viscosity at 25°C: 884 mPa.s; Viscosity at 50°C: 153 mPa.s; Viscosity at 75°C: 42 mPa.s; Viscosity at 100°C: 28 mPa.s; Density at 25°C: 1.065 g/ $cm^3$; Density at 60°C: 1.037 g/ $cm^3$; $^{13}C$ -NMR: DPG+5.0 PO+1.0 PA+4.0 PO, Mn=805 Da; Primary OH: 13.3% of total OH, Secondary OH: 86.7% of total OH; GPC: Mn=710 g/mol, Mw/Mn=1.11.

Example 10: Hybrid Polyol Synthesis

1173.0 g (2.60 mol) VORANOL CP450 polyol and 384.0 g (2.60 mol) phthalic anhydride are added to the reactor. The reaction mixture was flushed 10 times with 6 bar (600 kPa) nitrogen ($N_2$) pressure. The reactor was thermostated at 100°C with 6 bar of $N_2$ pressure with 50 rpm stirring. The slurry gradually dissolves in the reactor, becoming mainly liquid after 1 h at this temperature. Stirring rate was gradually increased from 50 to 100 rpm. The reactor content was stirred for additional 15 h. The $N_2$ pressure in the reactor was reduced to 1.0 bar, temperature was increased to 130°C and the stirring rate was increased to 300 rpm. PO (385.0 g, 6.63 mol) was fed to the reactor at an average feed rate of 5.5 g/min over 70 min. At the completion of the feed the total pressure in the reactor has reached 4.9 bar (490 kPa). 1.0 h of additional digestion time was allowed. The total pressure in the reactor decreases to 4.0 bar (400 kPa). A 268.0 g sample was taken with help of vacuumized steel bomb, connected to the bottom valve of the reactor. The sample was transferred into a glass flask and stripped off unreacted PO in vacuum with stirring for 10 min at 100°C. Solid DMC catalyst (0.346 g) was dispersed in the stripped polyol sample. The dispersion contains 1290 ppm of the DMC catalyst. Reactor was thermostated at 130°C. 66.6 g of the DMC catalyst dispersion, prepared as described above, was injected into the reactor with the help of a pressurized stainless steel bomb, connected to the reactor, followed by a feed of additional 70 g (1.21 mol) of PO. Reactor content is stirred for 1.0 h. No DMC catalyst activation was observed. Additional 91.4 g of the DMC catalyst dispersion was injected into the reactor, followed by a feed of additional 20 g (0.35 mol) of PO. Reactor content was stirred for an additional 1.5 h. No catalyst activation was observed. The reactor temperature was increased to 140°C. The remaining 110.0 g of the DMC catalyst dispersion was mixed with 1.41 g of $Al(s\text{-}BuO)_3$ and injected into the reactor. Smooth DMC catalyst activation, accompanied by a pressure drop in the reactor and an exotherm, was observed within 10 min following the injection. Additional 1152 g (19.83 mol) of PO are fed to the reactor at 30 g/min. Additional 0.5 h of digestion time was allowed. A colorless viscous liquid was obtained.

The produced hybrid polyester-polyether polyol has the following properties: OH value: 136 mg KOH/g; Acid number: 0.04 mg KOH/g; Total unsaturation: 0.0069 meq/g; Water: 60 ppm; Total volatiles 331 ppm; Viscosity at 25°C: 1130 mPa.s; Viscosity at 50°C: 189 mPa.s; Viscosity at 75°C: 48 mPa.s; Viscosity at 100°C: 12 mPa.s; Density at 60°C: 1.051 g/ $cm^3$; Density at 25°C: 1.026 g/ $cm^3$; $^{13}C$ -NMR: Glycerine+1.0 PA+16.8 PO, Mn=1217 Da; Primary OH: 11.8% of total OH, Secondary OH: 88.2% of total OH; GPC: Mn=1030 Da, Mw/Mn=1.11.

Example 11: Hybrid Polyol Synthesis

1340.5 g (2.96 mol) VORANOL CP450 polyol and 877.8 g (5.93 mol) phthalic anhydride are added to the

reactor. The reaction mixture was flushed 10 times with 6 bar (600 kPa) nitrogen ($N_2$) pressure. The reactor was thermostated at 100°C with 6 bar of $N_2$ pressure with 50 rpm stirring. The slurry gradually dissolves in the reactor, becoming mainly liquid after 1 h at this temperature. Stirring rate was gradually increased from 50 to 100 rpm. The reactor content was stirred for additional 15 h. The $N_2$ pressure in the reactor was reduced to 1.0 bar, temperature was increased to 130°C and the stirring rate was increased to 300 rpm. PO (678.0 g, 11.67 mol) was fed to the reactor at an average feed rate of 6.8 g/min over 100 min. At the completion of the feed the total pressure in the reactor has reached 4.9 bar (490 kPa). 45 min of additional digestion time was allowed. The total pressure in the reactor decreases to 4.4 bar (440 kPa). A 273.0 g sample was taken with help of vacuumized steel bomb, connected to the bottom valve of the reactor. The sample was transferred into a glass flask and stripped off unreacted PO in vacuum with stirring for 10 min at 100°C. Solid DMC catalyst (0.422 g) was dispersed in the stripped polyol sample. The dispersion contains 1545 ppm of the DMC catalyst. Reactor was thermostated at 130°C. 54.3 g of the DMC catalyst dispersion, prepared as described above, was injected into the reactor with the help of a pressurized stainless steel bomb, and connected to the reactor. Reactor content was stirred for 100 min. No DMC catalyst activation was observed. The reactor temperature was increased to 140°C. Additional 54.7 g of the DMC catalyst dispersion was injected into the reactor, followed by a feed of additional 98 g (1.69 mol) of PO. Reactor content was stirred for an additional 30 min. No catalyst activation was observed. Additional 94.4 g of the DMC catalyst dispersion was injected into the reactor. Reactor content was stirred for an additional 45 min. No catalyst activation was observed. The remaining 69.2 g of the DMC catalyst dispersion was mixed with 2.25 g of $Al(s\text{-}BuO)_3$ and injected into the reactor. Smooth DMC catalyst activation, accompanied by a pressure drop in the reactor and an exotherm, was observed within 10 min following the injection. Additional 827 g (14.24 mol) of PO are fed to the reactor at 30 g/min. Additional 0.5 h of digestion time was allowed. A colorless viscous liquid was obtained.

The produced hybrid polyester-polyether polyol has the following properties: OH value: 140 mg KOH/g; Acid number: 0.09 mg KOH/g; Total unsaturation: 0.0092 meq/g; Water: 120 ppm; Total volatiles 668 ppm; Viscosity at 25°C: 6400 mPa.s; Viscosity at 50°C: 687 mPa.s; Viscosity at 75°C: 127 mPa.s; Viscosity at 100°C: 53 mPa.s; Density at 60°C: 1.070 g/ $cm^3$; Density at 25°C: 1.097 g/ $cm^3$; $^{13}C$ -NMR: Glycerine+2.0 PA+15.7 PO, Mn=1300 Da; Primary OH: 18.5% of total OH, Secondary OH: 81.5% of total OH; GPC: Mn=1000 Da, Mw/Mn=1.13.

Example 12: Hybrid Polyol Synthesis

1066.4 g (2.37 mol) VORANOL CP450 polyol and 1053.0 g (7.11 mol) phthalic anhydride are added to the reactor. The reaction mixture was flushed 10 times with 6 bar (600 kPa) nitrogen ($N_2$) pressure. The reactor was thermostated at 110°C with 6 bar of $N_2$ pressure with 50 rpm stirring. The slurry gradually dissolves in the reactor, becoming mainly liquid after 1 h at this temperature. Stirring rate was gradually increased from 50 to 100 rpm. The reactor content was stirred for additional 15 h. The $N_2$ pressure in the reactor was reduced to 1.0 bar, temperature was increased to 130°C and the stirring rate was increased to 300 rpm. PO (825.0 g, 14.20 mol) was fed to the reactor at an average feed rate of 2.8 g/min over 290 min. At the completion of the feed the total pressure in the reactor has reached 4.9 bar (490 kPa). 21.0 h of additional digestion time was allowed. The total pressure in the reactor decreases to 2.9 bar (290 kPa). A 93.0 g sample was taken with help of vacuumized steel bomb, connected to the bottom valve of the reactor. The sample was transferred into a glass flask and stripped off unreacted PO in vacuum with stirring for 10 min at 100°C. 0.111 g of DMC catalyst and 2.25 g of $Al(s\text{-}BuO)_3$ are dispersed in the stripped polyol sample. The dispersion contains 1200 ppm of the DMC catalyst. Reactor temperature was increased to 140°C. The DMC catalyst dispersion, prepared as described above, was injected into the reactor with the help of a pressurized stainless steel bomb, connected to the reactor, followed by a feed of additional 100 g (1.72 mol) of PO. Smooth DMC catalyst activation, accompanied by a pressure drop in the reactor and an exotherm, was observed within 30 min following the injection. Additional 150 g (2.58 mol) of PO are fed to the reactor at 30 g/min. Additional 0.5 h of digestion time was allowed. A colorless viscous liquid was obtained.

The produced hybrid polyester-polyether polyol has the following properties: OH value: 129 mg KOH/g; Acid number: 1.31 mg KOH/g; Total unsaturation: 0.0097 meq/g; Water: 300 ppm; Total volatiles 1383 ppm; Viscosity at 25°C: 50100 mPa.s; Viscosity at 50°C: 3150 mPa.s; Viscosity at 75°C: 389 mPa.s; Viscosity at 100°C: 89 mPa.s; $^{13}C$ -NMR: Glycerine+3.0 PA+13.8 PO, Mn=1336 Da; Primary OH: 29.0% of total OH, Secondary OH: 71.0% of total OH; GPC: Mn=990 Da, Mw/Mn=1.15.

Example 13: Hybrid Polyol Synthesis

190.9 g (2.07 mol) glycerine and 307.1 g (2.07 mol) phthalic anhydride are mixed in 5 L stainless steel alkoxylation reactor. The reaction mixture was flushed 10 times with 6 bar (600 kPa) nitrogen ($N_2$) pressure without stirring. The reactor was thermostated at 110°C with 6 bar of $N_2$ pressure. Initially the solid reactor content gradually dissolves in the reactor, becoming mainly liquid after 0.5 h at this temperature. Stirring was switched on, gradually increasing the stirring rate from 50 to 200 rpm. The reactor content was stirred for an additional 1.5 h. The reactor temperature was decreased

to 100°C. 0.55 g of a 10% solution of triflic acid (50 ppm TFA based on the weight of product) in ethanol was injected into the reactor with the help of a pressurized stainless steel bomb, connected to the reactor. The $N_2$ pressure in the reactor was reduced to 1.0 bar, and the stirring rate was increased to 400 rpm. PO (610.5 g, 10.51 mol) was fed to the reactor at a feed rate of 15 g/min over 40 min. The immediate reaction start was accompanied by a strong exotherm. At the completion of the feed the total pressure in the reactor has reached 3.0 bar (300 kPa). Upon the end of the feed, 30 min of additional digestion time was allowed. The total pressure in the reactor decreases to 1.4 bar (140 kPa). Potassium carbonate (0.03 g, 0.22 mmol) added to the product in order to neutralize the remaining triflic acid. The product was then stripped in vacuum for 2 h at 100°C. A colorless viscous liquid was obtained.

The produced hybrid polyester-polyether polyol has the following properties: OH value: 243 mg KOH/g; Acid number: 48 mg KOH/g; Total unsaturation: 0.006 meq/g; Water: 120 ppm; Total volatiles 329 ppm; Viscosity at 50°C: 1820 mPa.s; Viscosity at 75°C: 280 mPa.s; Viscosity at 100°C: 83 mPa.s; Density at 60°C: 1.124 g/ $cm^3$; Density at 25°C: 1.151 g/ $cm^3$; pH: 3.5. $^{13}C$ -NMR: Glycerine+1.0 PA+4.7 PO, Mn=514 Da; Primary OH: 63.2% of total OH, Secondary OH: 36.8% of total OH. GPC: Mn=330 g/mol, Mw/Mn=1.39.

Example 14: Hybrid Polyol Synthesis

2011.0 g (7.89 mol) of VORANOL* CP260 triol polyether polyol, 1520.4 g (10.25 mol) phthalic anhydride and 0.20 g of 2-Ethyl-4-Methyl-Imidazole (51 ppm EMI based on the weight of product) are mixed in 5 L stainless steel alkoxylation reactor. The reaction mixture was flushed 10 times with 6 bar (600 kPa) nitrogen ($N_2$) pressure with stirring at 50 rpm. The reactor was thermostated at 130°C with 6 bar of $N_2$ pressure. The initial reaction slurry gradually dissolves in the reactor, becoming mainly liquid after 0.50 Hrs. at this temperature. The stirring rate was gradually increased from 50 to 200 rpm. The reactor content was stirred for an additional 1.50 Hrs. The $N_2$ pressure in the reactor was reduced to 1.0 bar, and the stirring rate was increased to 300 rpm. PO (1202.0 g, 20.70 mol) was fed to the reactor at a feed rate of 15 g/min over 80 mins. The immediate reaction start was accompanied by an exotherm. At the completion of the feed the total pressure in the reactor has reached 4.9 bar (490 kPa). 3.0 Hrs. of additional digestion time was allowed. The total pressure in the reactor decreases to 4.3 bar (430 kPa). The reactor temperature was decreased to 100°C. 6.33 g of a 10% solution of triflic acid (142 ppm TFA based on the weight of product) in ethanol was injected into the reactor with the help of a pressurized stainless steel bomb, connected to the reactor. Immediate pressure drop in the reactor and an exotherm are observed. Upon the end of this feed, 30 min of additional digestion time was allowed. Residual nitrogen pressure was vented off; the reaction mixture was flushed 10 times with 6 bar (600 kPa) $N_2$ pressure. Potassium hydroxide (6.67 g, 0.5 mol/l solution in ethanol) was added to the product in order to neutralize the remaining triflic acid. The product was then stripped in vacuum for 1 h at 120°C. A colorless viscous liquid was obtained.

The produced hybrid polyester-polyether polyol has the following properties: OH value: 269 mg KOH/g; Acid number: 1.27 mg KOH/g; Total unsaturation: 0.006 meq/g; Water: 13 ppm; Viscosity at 25°C: 36500 mPa.s; Viscosity at 50°C: 2050 mPa.s; Viscosity at 75°C: 268 mPa.s; Viscosity at 100°C: 74 mPa.s; Density at 60°C: 1.126 g/$cm^3$; Density at 25°C: 1.153 g/$cm^3$; pH: 5.2. $^{13}C$ -NMR: Glycerine+2.8 PO+1.3 PA+2.6 PO, Mn=6000 Da; Primary OH: 32.5% of total OH, Secondary OH: 67.5% of total OH. GPC: Mn=450 g/mol, Mw/Mn=1.18.

Comparative Example C15: Polyol

A polypropylene glycol polymer was prepared with deionized water as the initiator using DMC catalyst.

The polyether polyol has the following properties: OH value: 146 mg KOH/g; Acid number: 0.03 mg KOH/g; Total unsaturation: 0.0068 meq/g; Water: 30 ppm; Total volatiles 31 ppm; Viscosity at 25°C: 121 mPa.s; Viscosity at 50°C: 40 mPa.s; Viscosity at 75°C: 21 mPa.s; Viscosity at 100°C: 16 mPa.s; Density at 60°C: 0.9739 g/ $cm^3$; Density at 25°C: 1.001 g/$cm^3$; pH: 8.4.

Comparative Example C16: Polyol:

A polypropylene glycol polymer was prepared with glycerine as the initiator using DMC catalyst.

The polyether polyol has the following properties: OH value: 143 mg KOH/g; Acid number: 0.03 mg KOH/g; Total unsaturation: 0.0036 meq/g; Water: 110 ppm; Total volatiles 32 ppm; Viscosity at 25°C: 301 mPa.s; Viscosity at 50°C: 80 mPa.s; Viscosity at 75°C: 20 mPa.s; Viscosity at 100°C: 10 mPa.s; Density at 60°C: 0.9891 g/$cm^3$; Density at 25°C: 1.016 g/$cm^3$; pH: 8.6.

The adhesion properties of the Hybrid Polyols and polyols were evaluated with Isocyanate Prepolymer resins using a series of laminate constructions. These two-part adhesive systems were evaluated via a solvent hand casting method and laminator.

Tests to measure the adhesive properties

Adhesive Lamination Evaluation Procedure:

Adhesive formulas were screened from a solvent based solution (50% solids) by dissolving either Polyisocyanate I or Polyisocyanate II in dry ethyl acetate and mixing in a rolling mill in a glass bottle, then adding the hybrid polyol or the polyether-polyol to the solution and mixing further on the rolling mill until the solution was uniform in appearance.

The films and metallized films were corona treated at a power level of ca. 0.1 KW. Aluminum Foil was used without corona treatment. The adhesive solution was hand coated onto the primary film with a #3 wire wound draw down rod to yield a coating weight of 1.6276 g/$m^2$ (1.0 lb/rm) and then dried under an IR heater for approximately 30 sec. The primary film was laminated to the secondary film on a water heated laminator with a nip temperature of 65.6°C (150°F). Three laminates 20.3 cm X 27.9 cm (8 in. X 11 in.) were prepared for each construction with a bond strip within the laminate to facilitate bond testing. The laminates were placed under a 0.45 - 0.90 kg (1 - 2 lbs) weight in order to apply equivalent pressure across the laminate sample.

T-Peel Bond Strength Procedure:

T-Peel bond strengths were measured on 15 mm X 127 cm (5 in.) long samples cut from the laminate structure utilizing a bond strip cutter. The T-peel strengths were measured on samples from each of the three laminates for each construction at a T-peel rate of 10 cm / min. on a Thwing-Albert QC-3A Tensile Tester with a 50 N Test Fixture, and the high and mean strength was recorded for each sample along with the failure mode, the average -T-peel strength is reported. Bond strength on laminates was measured at 1, and 7 days.

The following abbreviations are used to describe test results: "as" = adhesive split; "ftr" = film tear; "fstr" = film stretch; "sec" = secondary; "zip" = zippery bond; "pmt" = partial metal transfer.

The substrates used in the adhesion testing were as follows:

| Film | Description |
|---|---|
| 75 SLP | Exxon Mobil Bicor SLP Oriented Polypropylene, Non-Heat Sealable, Thickness 19 micrometers (0.750 mils |
| 70 SPW | Exxon Mobil Bicor SPW Coextruded Polypropylene, Thickness 18 micrometers |
| PE (GF19) | Berry Plastics Corp., High slip LDPE film, 1.0 mil (25.4 microns) |
| PET (92LBT) | DuPont, Polyester, Poly(ethylene glycol - terephthalate), Thickness 12 microns |
| Emblem 1500 (Nylon) | Honeywell Capran Emblem 1500, Biaxially Oriented Nylon 6, Thickness 15 microns |
| PET-Met | FILMTech Inc., Metallized Polyester Film, Thickness 25.4 microns |
| OPP-Met | AET Films, Metallized Oriented Polypropylene Film, MT Film, Heat Sealable, Thickness 18 microns |
| Foil (Backed Foil) | PET Backed Foil - 48 Gauge PET film (12 micron thick), 0.00035" Al Foil |

The laminates were as follows.

| Code | Primary Substrate | Secondary Substrate |
|---|---|---|
| 75SLP / 70SPW | 75SLP (SLP Oriented Polypropylene) | 70SPW (Bicor SPW Coextruded Film) |
| 75SLP / GF-19 | 75SLP (SLP Oriented Polypropylene) | GF-19 (High Slip Polyethylene) |
| 92LBT / GF-19 | 92LBT (PET Polyester Film) | GF-19 (High Slip Polyethylene) |
| Emblem 1500 / GF-19 | Emblem 1500 (Biaxially Oriented Nylon 6 Film) | GF-19 (High Slip Polyethylene) |
| PET-Met / GF-19 | PET-Met (Metallized Polyester) | GF-19 (High Slip Polyethylene) |
| OPP-Met / GF-19 | OPP-Met (Metallized Oriented Polypropylene) | GF-19 (High Slip Polyethylene) |
| OPP-Met / 70 SPW | OPP-Met (Metallized Oriented Polypropylene) | GF-19 (High Slip Polyethylene) |
| Backed Foil / Nylon | Backed Foil | Nylon (Biaxially Oriented Nylon 6 Film) |

(continued)

| Code | Primary Substrate | Secondary Substrate |
|---|---|---|
| Backed Foil / 92LBT | Backed Foil | 92LBT (PET Polyester Film_ |

Example 17:

Hybrid Polyol of Example 3 was evaluated with Polyisocyanate I at a mix weight ratio of Polyisocyanate I : Hybrid Polyol 3 of 100 : 85 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| CoexPP (75SLP) / CoexPP (70SPW) | 2.12, ftr | 2.70, ftr |
| CoexPP (75SLP) / PE (GF-19) | 2.71, ftr | 2.53, ftr |
| PET / PE (GF-19) | 2.85, as, fstr | 3.01, as, fstr |
| Nylon / PE (GF-19) | 1.58, as | 6.13, ftr |
| PET-Met / PE (GF-19) | 2.19, ftr | 4.93, ftr |
| OPP-Met / PE (GF-19) | 1.81, as | 4.30, ftr |
| OPP-Met / CoexPP (70SPW) | 1.92, ftr | 2.07, ftr |
| Backed Foil / Nylon | 1.34, as | 2.29, as |
| Backed Foil / PET (92LBT) | 1.56, as | 4.16, as |

Example 18:

Hybrid Polyol of Example 3 was evaluated with Polyisocyanate I at a mix weight ratio of Polyisocyanate I : Hybrid Polyol 3 of 100 : 80 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.23, ftr | 3.03, ftr |
| CoexPP (75SLP) / PE (GF-19) | 2.38, ftr | 2.62, ftr |
| PET / PE (GF-19) | 2.55, as. fstr | 4.86, ftr |
| Nylon / PE (GF-19) | 2.27, as | 5.90, ftr |
| PET-Met / PE (GF-19) | 2.10, as | 3.27, ftr |
| OPP-Met / PE (GF-19) | 1.31, as | 4.10, ftr |
| OPP-Met / CoexPP (70SPW) | 1.74, ftr | 1.86, ftr |
| Backed Foil / Nylon | 1.70, as | 1.92, as |
| Backed Foil / PET (92LBT) | 1.78, as | 2.63, as |

Example 19:

Hybrid Polyol of Example 3 was evaluated with Polyisocyanate I at a mix weight ratio of Polyisocyanate I : Hybrid Polyol 3 of 100 : 75 from a 50% Ethyl Acetate solution. The bond strength was examined as a function of curing

time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.26, ftr | 3.49, ftr |
| CoexPP (75SLP) / PE (GF-19) | 2.31, ftr | 2.61, ftr |
| PET / PE (GF-19) | 3.03, as | 4.85, ftr |
| Nylon / PE (GF-19) | 4.08, ftr | 6.01, ftr |
| PET-Met / PE (GF-19) | 2.15, as | 2.20, ftr |
| OPP-Met / PE (GF-19) | 1.34, as | 4.08, ftr |
| OPP-Met / CoexPP (70SPW) | 1.45, ftr | 1.49, ftr |
| Backed Foil / Nylon | 1.70, as | 1.60, as |
| Backed Foil / PET (92LBT) | 2.05, as | 2.29, as |

Example 20:

Hybrid Polyol of Example 4 was evaluated with Polyisocyanate I at a mix weight ratio of Polyisocyanate I : Hybrid Polyol 4 of 100 : 80 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.88, as | 2.85, ftr |
| CoexPP (75SLP) / PE (GF-19) | 1.55, as | 4.81, ftr |
| PET / PE (GF-19) | 4.11, as, fstr | 2.89, ftr |
| Nylon / PE (GF-19) | 2.62, as | 5.74, ftr |
| PET-Met / PE (GF-19) | 2.31, ftr | 7.98, ftr |
| OPP-Met / PE (GF-19) | 1.64, as | 5.49, ftr |
| OPP-Met / CoexPP (70SPW) | 1.74, ftr | 1.71, ftr |
| Backed Foil / Nylon | 1.61, as | 2.90, ftr |
| Backed Foil / PET (92LBT) | 1.12, as | 5.16, ftr |

Example 21:

Hybrid Polyol of Example 4 was evaluated with Polyisocyanate I at a mix weight ratio of Polyisocyanate I : Hybrid Polyol 4 of 100 : 75 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |

(continued)

| Laminate Structure | Bond Strength (N / 15 mm) | |
|---|---|---|
| | 1 Day | 7 Day |
| CoexPP (75SLP) / CoexPP (70SPW) | 1.92, as | 2.33, ftr |
| CoexPP (75SLP) / PE (GF-19) | 1.42, as | 4.23, ftr |
| PET / PE (GF-19) | 3.75, as, fstr | 3.16, ftr |
| Nylon / PE (GF-19) | 2.27, as | 4.99, ftr |
| PET-Met / PE (GF-19) | 2.04, ftr | 5.54, ftr |
| OPP-Met / PE (GF-19) | 1.29, as | 4.27, ftr |
| OPP-Met / CoexPP (70SPW) | 1.41, ftr | 1.56, ftr |
| Backed Foil / Nylon | 1.28, as | 3.30, ftr |
| Backed Foil / PET (92LBT) | 1.09, as | 4.23, ftr |

Example 22:

Hybrid Polyol of Example 4 was evaluated with Polyisocyanate I at a mix weight ratio of Polyisocyanate I : Hybrid Polyol 4 of 100 : 70 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.72, as | 2.32, ftr |
| CoexPP (75SLP) / PE (GF-19) | 1.31, as | 3.87, ftr |
| PET / PE (GF-19) | 3.01, as | 4.00, ftr |
| Nylon / PE (GF-19) | 2.08, as | 4.26, ftr |
| PET-Met / PE (GF-19) | 1.83, ftr | 4.15, ftr |
| OPP-Met / PE (GF-19) | 1.30, as | 3.59, ftr |
| OPP-Met / CoexPP (70SPW) | 1.30, ftr | 1.61, ftr |
| Backed Foil / Nylon | 1.23, as | 3.11, ftr |
| Backed Foil / PET (92LBT) | 0.92, as | 3.81, ftr |

Example 23:

Hybrid Polyol of Example 1 was evaluated with Polyisocyanate I at a mix weight ratio of Polyisocyanate I : Hybrid Polyol 1 of 100 : 100 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.24, as | 1.07, as |

(continued)

| Laminate Structure | Bond Strength (N / 15 mm) | |
|---|---|---|
| | 1 Day | 7 Day |
| CoexPP (75SLP) / PE (GF-19) | 0.76, as | 1.26, as |
| PET / PE (GF-19) | 1.79, as | 2.60, as |
| Nylon / PE (GF-19) | 1.13, as | 3.59, as |
| PET-Met / PE (GF-19) | 1.03, as | 1.42, as |
| OPP-Met / PE (GF-19) | 0.81, as | 0.82, as |
| OPP-Met / CoexPP (70SPW) | 0.86, as | 0.60, as |
| Backed Foil / Nylon | 0.63, as | 0.71, as |
| Backed Foil / PET (92LBT) | 0.28, as | 0.71, as |

Example 24:

Hybrid Polyol of Example 1 was evaluated with Polyisocyanate I at a mix weight ratio of Polyisocyanate I : Hybrid Polyol 1 of 100 : 94 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.43, as | 0.93, as |
| CoexPP (75SLP) / PE (GF-19) | 1.10, as | 1.56, as |
| PET / PE (GF-19) | 2.09, as | 2.80, as |
| Nylon / PE (GF-19) | 1.35, as | 4.14, as |
| PET-Met / PE (GF-19) | 1.12, as | 1.33, as |
| OPP-Met / PE (GF-19) | 1.05, as | 0.92, as |
| OPP-Met / CoexPP (70SPW) | 0.78, as | 0.99, as |
| Backed Foil / Nylon | 0.59, as | 0.81, as |
| Backed Foil / PET (92LBT) | 0.36, as | 0.71, as |

Example 25:

Hybrid Polyol of Example 1 was evaluated with Polyisocyanate I at a mix weight ratio of Polyisocyanate I : Hybrid Polyol 1 of 100 : 90 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.73, as | 1.31, as |

(continued)

| Laminate Structure | Bond Strength (N / 15 mm) | |
|---|---|---|
| | 1 Day | 7 Day |
| CoexPP (75SLP) / PE (GF-19) | 1.48, as | 1.81, as |
| PET / PE (GF-19) | 2.14, as | 2.51, as |
| Nylon / PE (GF-19) | 2.02, as | 3.67, as |
| PET-Met / PE (GF-19) | 0.93, as | 2.11, as |
| OPP-Met / PE (GF-19) | 1.68, as | 1.35, as |
| OPP-Met / CoexPP (70SPW) | 1.11, as | 1.23, as |
| Backed Foil / Nylon | 0.41, as | 1.14, as |
| Backed Foil / PET (92LBT) | 0.34, as | 0.96, as |

Example 26:

Hybrid Polyol of Example 2 was evaluated with Polyisocyanate I at a mix weight ratio of Polyisocyanate I : Hybrid Polyol 2 of 100 : 75 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 3.37, ftr | 3.67, ftr |
| CoexPP (75SLP) / PE (GF-19) | 3.02, ftr | 3.15, ftr |
| PET / PE (GF-19) | 4.04, ftr | 4.10, ftr |
| Nylon / PE (GF-19) | 3.25, ftr | 3.18, ftr |
| PET-Met / PE (GF-19) | 2.18, ftr | 2.31, ftr |
| OPP-Met / PE (GF-19) | 2.18, ftr | 2.53, ftr |
| OPP-Met / CoexPP (70SPW) | 1.66, ftr | 1.80, ftr |
| Backed Foil / Nylon | 0.94, as, zip | 0.91, as |
| Backed Foil / PET (92LBT) | 1.09, ftr | 1.23, ftr |

Example 27:

Hybrid Polyol of Example 2 was evaluated with Polyisocyanate I at a mix weight ratio of Polyisocyanate I : Hybrid Polyol 2 of 100 : 70 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 3.08, ftr | 3.31, ftr |
| CoexPP (75SLP) / PE (GF-19) | 2.54, ftr | 2.96, ftr |
| PET / PE (GF-19) | 3.72, ftr | 3.52, ftr |

(continued)

| Laminate Structure | Bond Strength (N / 15 mm) | |
|---|---|---|
| | 1 Day | 7 Day |
| Nylon / PE (GF-19) | 3.12, ftr | 2.91, ftr |
| PET-Met / PE (GF-19) | 2.08, ftr | 2.08, ftr |
| OPP-Met / PE (GF-19) | 2.04, ftr | 2.05, ftr |
| OPP-Met / CoexPP (70SPW) | 1.64, ftr | 1.34, ftr |
| Backed Foil / Nylon | 0.55, as, zip | 1.34, as |
| Backed Foil / PET (92LBT) | 0.89, ftr | 1.20, ftr |

Example 28:

Hybrid Polyol of Example 2 was evaluated with Polyisocyanate I at a mix weight ratio of Polyisocyanate I : Hybrid Polyol 2 of 100 : 65 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.92, ftr | 3.23, ftr |
| CoexPP (75SLP) / PE (GF-19) | 2.35, ftr | 2.68, ftr |
| PET / PE (GF-19) | 3.11, ftr | 3.51, ftr |
| Nylon / PE (GF-19) | 2.56, ftr | 2.90, ftr |
| PET-Met / PE (GF-19) | 1.77, ftr | 2.51, ftr |
| OPP-Met / PE (GF-19) | 1.82, ftr | 2.01, ftr |
| OPP-Met / CoexPP (70SPW) | 1.31, ftr | 1.36, ftr |
| Backed Foil / Nylon | 0.82, as, zip | 1.42, as |
| Backed Foil / PET (92LBT) | 0.72, ftr | 1.06, ftr |

Example 29:

Hybrid Polyol of Example 5 was evaluated with Polyisocyanate I at a mix weight ratio of Polyisocyanate I : Hybrid Polyol 5 of 100 : 85 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.07, as | 3.30, ftr |
| CoexPP (75SLP) / PE (GF-19) | 1.17, as | 3.37, ftr |
| PET / PE (GF-19) | 4.23, as, fstr | 6.99, ftr |
| Nylon / PE (GF-19) | 4.26, ftr | 7.76, ftr |
| PET-Met / PE (GF-19) | 3.49, ftr | 5.01, ftr |
| OPP-Met / PE (GF-19) | 2.18, as | 6.16, ftr |

(continued)

| Laminate Structure | Bond Strength (N / 15 mm) | |
|---|---|---|
| | 1 Day | 7 Day |
| OPP-Met / CoexPP (70SPW) | 3.55, ftr | 4.28, ftr |
| Backed Foil / Nylon | 3.91, as | 5.54, ftr |
| Backed Foil / PET (92LBT) | 1.13, as | 4.29, ftr |

Example 30:

Hybrid Polyol of Example 5 was evaluated with Polyisocyanate I at a mix weight ratio of Polyisocyanate I : Hybrid Polyol 5 of 100 : 80 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.30, ftr | 2.62, ftr |
| CoexPP (75SLP) / PE (GF-19) | 2.20, as | 3.06, ftr |
| PET / PE (GF-19) | 3.54, as, fstr | 6.71, ftr |
| Nylon / PE (GF-19) | 4.00, ftr | 7.53, ftr |
| PET-Met / PE (GF-19) | 3.16, ftr | 4.75, ftr |
| OPP-Met / PE (GF-19) | 2.37, as | 5.96, ftr |
| OPP-Met / CoexPP (70SPW) | 3.44, ftr | 4.07, ftr |
| Backed Foil / Nylon | 3.07, as | 5.24, ftr |
| Backed Foil / PET (92LBT) | 1.30, as | 4.03, ftr |

Example 31:

Hybrid Polyol of Example 5 was evaluated with Polyisocyanate I at a mix weight ratio of Polyisocyanate I : Hybrid Polyol 5 of 100 : 75 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.11, ftr | 1.41, ftr |
| CoexPP (75SLP) / PE (GF-19) | 2.11, as | 2.80, ftr |
| PET / PE (GF-19) | 2.87 as, fstr | 6.33, ftr |
| Nylon / PE (GF-19) | 3.85, ftr | 7.42, ftr |
| PET-Met / PE (GF-19) | 3.06, ftr | 4.47, ftr |
| OPP-Met / PE (GF-19) | 2.28, as | 5.76, ftr |
| OPP-Met / CoexPP (70SPW) | 3.05, ftr | 4.00, ftr |
| Backed Foil / Nylon | 3.30, as | 5.31, ftr |
| Backed Foil / PET (92LBT) | 0.63, as | 3.36, ftr |

Example 32:

Hybrid Polyol of Example 6 was evaluated with Polyisocyanate I at a mix weight ratio of Polyisocyanate I : Hybrid Polyol 6 of 100 : 85 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.03, ftr | 1.64, ftr |
| CoexPP (75SLP) / PE (GF-19) | 2.25, as | 4.05, ftr |
| PET / PE (GF-19) | 4.29, as, fstr | 5.19, ftr |
| Nylon / PE (GF-19) | 3.46, as, zip | 5.44, ftr |
| PET-Met / PE (GF-19) | 2.71, ftr | 3.30, ftr |
| OPP-Met / PE (GF-19) | 1.99, ftr | 5.35, ftr |
| OPP-Met / CoexPP (70SPW) | 2.41, ftr | 2.70, ftr |
| Backed Foil / Nylon | 2.02, as, zip | 3.16, ftr |
| Backed Foil / PET (92LBT) | 1.31, as | 2.13, ftr |

Example 33:

Hybrid Polyol of Example 6 was evaluated with Polyisocyanate I at a mix weight ratio of Polyisocyanate I : Hybrid Polyol 6 of 100 : 80 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.97, ftr | 1.80, ftr |
| CoexPP (75SLP) / PE (GF-19) | 1.31, as | 4.27, ftr |
| PET / PE (GF-19) | 4.48, as, fstr | 5.63, ftr |
| Nylon / PE (GF-19) | 4.29, ftr | 5.50, ftr |
| PET-Met / PE (GF-19) | 2.84, ftr | 4.03, ftr |
| OPP-Met / PE (GF-19) | 2.48, ftr | 3.29, ftr |
| OPP-Met / CoexPP (70SPW) | 2.02, ftr | 2.32, ftr |
| Backed Foil / Nylon | 2.11, as, zip | 2.30, ftr |
| Backed Foil / PET (92LBT) | 1.34, as | 1.39, as |

Example 34:

Hybrid Polyol of Example 6 was evaluated with Polyisocyanate I at a mix weight ratio of Polyisocyanate I : Hybrid Polyol 6 of 100 : 75 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.97, ftr | 2.06, ftr |
| CoexPP (75SLP) / PE (GF-19) | 2.11, ftr | 4.65, ftr |
| PET / PE (GF-19) | 5.08, as, fstr | 6.07, ftr |
| Nylon / PE (GF-19) | 4.70, ftr | 5.84, ftr |
| PET-Met / PE (GF-19) | 3.13, ftr | 4.53, ftr |
| OPP-Met / PE (GF-19) | 3.41, ftr | 2.68, ftr |
| OPP-Met / CoexPP (70SPW) | 1.79, ftr | 2.14, ftr |
| Backed Foil / Nylon | 1.55, as, zip | 2.12, as |
| Backed Foil / PET (92LBT) | 1.23, as | 1.53, as |

Example 35:

Hybrid Polyol of Example 7 was evaluated with Polyisocyanate I at a mix weight ratio of Polyisocyanate I : Hybrid Polyol 7 of 100 : 83 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.43, ftr | 3.26, ftr |
| CoexPP (75SLP) / PE (GF-19) | 2.13, ftr | 2.77, ftr |
| PET / PE (GF-19) | 3.94, as, fstr | 5.83, ftr |
| Nylon / PE (GF-19) | 3.31, ftr | 4.93, ftr |
| PET-Met / PE (GF-19) | 2.79, ftr | 4.99, ftr |
| OPP-Met / PE (GF-19) | 1.77, ftr | 3.21, ftr |
| OPP-Met / CoexPP (70SPW) | 1.11, as | 2.12, ftr |
| Backed Foil / Nylon | 0.80, as, zip | 1.55, as |
| Backed Foil / PET (92LBT) | 0.87, as, zip | 1.40, as |

Example 36:

Hybrid Polyol of Example 7 was evaluated with Polyisocyanate I at a mix weight ratio of Polyisocyanate I : Hybrid Polyol 7 of 100 : 78 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.59, ftr | 2.89, ftr |
| CoexPP (75SLP) / PE (GF-19) | 2.19, ftr | 3.68, ftr |
| PET / PE (GF-19) | 4.13, as, fstr | 4.92, ftr |

(continued)

| Laminate Structure | Bond Strength (N / 15 mm) | |
|---|---|---|
| | 1 Day | 7 Day |
| Nylon / PE (GF-19) | 3.64, ftr | 4.50, ftr |
| PET-Met / PE (GF-19) | 2.38, ftr | 4.09, ftr |
| OPP-Met / PE (GF-19) | 1.74, ftr | 2.89, ftr |
| OPP-Met / CoexPP (70SPW) | 0.94, as | 1.78, ftr |
| Backed Foil / Nylon | 0.52, as, zip | 1.43, as |
| Backed Foil / PET (92LBT) | 0.76, as, zip | 1.31, as |

Example 37:

Hybrid Polyol of Example 7 was evaluated with Polyisocyanate I at a mix weight ratio of Polyisocyanate I : Hybrid Polyol 7 of 100 : 73 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.06, ftr | 1.95, ftr |
| CoexPP (75SLP) / PE (GF-19) | 2.52, ftr | 4.87, ftr |
| PET / PE (GF-19) | 4.31, as, fstr | 4.82, ftr |
| Nylon / PE (GF-19) | 4.04, ftr, zip | 4.95, ftr |
| PET-Met / PE (GF-19) | 2.09, ftr | 4.33, ftr |
| OPP-Met / PE (GF-19) | 1.56, ftr | 2.59, ftr |
| OPP-Met / CoexPP (70SPW) | 0.68, as | 1.44, ftr |
| Backed Foil / Nylon | 0.48, as, zip | 1.26, as |
| Backed Foil / PET (92LBT) | 0.61, as, zip | 1.33, as |

Example 38:

Hybrid Polyol of Example 8 was evaluated with Polyisocyanate I at a mix weight ratio of Polyisocyanate I : Hybrid Polyol 8 of 100 : 93 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.95, ftr | 2.13, ftr |
| CoexPP (75SLP) / PE (GF-19) | 4.00, as | 4.56, ftr |
| PET / PE (GF-19) | 2.34, as, fstr | 3.00, ftr |
| Nylon / PE (GF-19) | 2.04, as | 3.10, ftr |
| PET-Met / PE (GF-19) | 2.35, ftr | 2.43, ftr |
| OPP-Met / PE (GF-19) | 3.41, ftr | 3.49, ftr |

(continued)

| Laminate Structure | Bond Strength (N / 15 mm) | |
|---|---|---|
| | 1 Day | 7 Day |
| OPP-Met / CoexPP (70SPW) | 1.89, ftr | 2.11, ftr |
| Backed Foil / Nylon | 1.17, as | 3.48, ftr |
| Backed Foil / PET (92LBT) | 1.40, as | 2.43, ftr |

Example 39:

Hybrid Polyol of Example 8 was evaluated with Polyisocyanate I at a mix weight ratio of Polyisocyanate I : Hybrid Polyol 8 of 100 : 87 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.19, ftr | 2.31, ftr |
| CoexPP (75SLP) / PE (GF-19) | 2.46, as | 4.74, ftr |
| PET / PE (GF-19) | 3.98, as, fstr | 3.46, ftr |
| Nylon / PE (GF-19) | 1.21, as | 3.33, ftr |
| PET-Met / PE (GF-19) | 2.51, ftr | 2.67, ftr |
| OPP-Met / PE (GF-19) | 3.42, ftr | 3.59, ftr |
| OPP-Met / CoexPP (70SPW) | 2.43, ftr | 2.80, ftr |
| Backed Foil / Nylon | 2.12, as | 3.58, ftr |
| Backed Foil / PET (92LBT) | 1.30, as | 2.22, ftr |

Example 40:

Hybrid Polyol of Example 8 was evaluated with Polyisocyanate I at a mix weight ratio of Polyisocyanate I: Hybrid Polyol 8 of 100 : 82 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.42, ftr | 2.52, ftr |
| CoexPP (75SLP) / PE (GF-19) | 3.66, as | 5.08, ftr |
| PET / PE (GF-19) | 4.63, as, fstr | 4.08, ftr |
| Nylon / PE (GF-19) | 3.15, as | 4.37, ftr |
| PET-Met / PE (GF-19) | 2.87, ftr | 3.17, ftr |
| OPP-Met / PE (GF-19) | 4.00, ftr | 4.15, ftr |
| OPP-Met / CoexPP (70SPW) | 2.71, ftr | 3.09, ftr |
| Backed Foil / Nylon | 2.28, as | 3.99, ftr |
| Backed Foil / PET (92LBT) | 1.61, as | 3.10, ftr |

Example 41:

Hybrid Polyol of Example 9 was evaluated with Polyisocyanate I at a mix weight ratio of Polyisocyanate I: Hybrid Polyol 9 of 100 : 80 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.02, as | 1.48, as |
| CoexPP (75SLP) / PE (GF-19) | 2.56, as | 1.58, as |
| PET / PE (GF-19) | 2.62, as | 3.42, as |
| Nylon / PE (GF-19) | 2.04, as | 4.56, ftr |
| PET-Met / PE (GF-19) | 2.34, as | 3.53, ftr |
| OPP-Met / PE (GF-19) | 1.52, as | 4.15, ftr |
| OPP-Met / CoexPP (70SPW) | 1.39, as | 4.41, ftr |
| Backed Foil / Nylon | 1.32, as | 3.10, as |
| Backed Foil / PET (92LBT) | 1.34, as | 1.23, as |

Example 42:

Hybrid Polyol of Example 9 was evaluated with Polyisocyanate I at a mix weight ratio of Polyisocyanate I: Hybrid Polyol 9 of 100 : 75 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.12, as | 2.38, ftr |
| CoexPP (75SLP) / PE (GF-19) | 2.08, as | 2.11, ftr |
| PET / PE (GF-19) | 2.09, as | 3.65, ftr |
| Nylon / PE (GF-19) | 3.02, as | 5.28, ftr |
| PET-Met / PE (GF-19) | 1.80, as | 4.20, ftr |
| OPP-Met / PE (GF-19) | 1.70, as | 3.47, ftr |
| OPP-Met / CoexPP (70SPW) | 1.03, as | 3.44, ftr |
| Backed Foil / Nylon | 1.11, as | 2.10, as |
| Backed Foil / PET (92LBT) | 1.05, as | 0.31, as |

Example 43:

Hybrid Polyol of Example 9 was evaluated with Polyisocyanate I at a mix weight ratio of Polyisocyanate I: Hybrid Polyol 9 of 100 : 70 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.31, as | 2.90, ftr |
| CoexPP (75SLP) / PE (GF-19) | 1.43, ftr | 2.40, ftr |
| PET / PE (GF-19) | 2.21, as | 3.86, ftr |
| Nylon / PE (GF-19) | 2.39, as | 7.52, ftr |
| PET-Met / PE (GF-19) | 2.29, as | 5.09, ftr |
| OPP-Met / PE (GF-19) | 1.81, as | 3.14, ftr |
| OPP-Met / CoexPP (70SPW) | 1.01, as | 2.15, ftr |
| Backed Foil / Nylon | 1.80, as | 2.54, as |
| Backed Foil / PET (92LBT) | 1.02, as | 0.64, as |

Example 44:

Hybrid Polyol of Example 10 was evaluated with Polyisocyanate I at a mix weight ratio of Polyisocyanate I: Hybrid Polyol 10 of 100 : 83 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 5.04, ftr | 2.96, ftr |
| CoexPP (75SLP) / PE (GF-19) | 3.15, ftr | 4.97, ftr |
| PET / PE (GF-19) | 2.98, as | 3.39, as |
| Nylon / PE (GF-19) | 5.36, as, fstr | 3.34, ftr |
| PET-Met / PE (GF-19) | 4.23, ftr | 6.82, ftr |
| OPP-Met / PE (GF-19) | 4.91, ftr | 7.41,ftr |
| OPP-Met / CoexPP (70SPW) | 3.78, ftr | 3.53, ftr |
| Backed Foil / Nylon | 1.72, as | 1.62, ftr |
| Backed Foil / PET (92LBT) | 1.27, as | 2.30, as |

Example 45:

Hybrid Polyol of Example 10 was evaluated with Polyisocyanate I at a mix weight ratio of Polyisocyanate I: Hybrid Polyol 10 of 100 : 78 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 3.52, ftr | 2.42, ftr |

(continued)

| Laminate Structure | Bond Strength (N / 15 mm) | |
|---|---|---|
| | 1 Day | 7 Day |
| CoexPP (75SLP) / PE (GF-19) | 3.53, ftr | 4.62, ftr |
| PET / PE (GF-19) | 2.91, as | 3.63, as |
| Nylon / PE (GF-19) | 3.69, as. fstr | 4.38, ftr |
| PET-Met / PE (GF-19) | 3.82, ftr | 5.34, ftr |
| OPP-Met / PE (GF-19) | 3.66, as, fstr | 5.38, ftr |
| OPP-Met / CoexPP (70SPW) | 3.12, ftr | 3.27, ftr |
| Backed Foil / Nylon | 2.70, as | 2.69, as |
| Backed Foil / PET (92LBT) | 1.19, as | 2.87, as |

Example 46:

Hybrid Polyol of Example 10 was evaluated with Polyisocyanate I at a mix weight ratio of Polyisocyanate I: Hybrid Polyol 10 of 100 : 73 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.56, ftr | 2.13, ftr |
| CoexPP (75SLP) / PE (GF-19) | 3.86, ftr | 4.86, ftr |
| PET / PE (GF-19) | 3.31, as | 2.89, as |
| Nylon / PE (GF-19) | 6.42, ftr | 6.99, ftr |
| PET-Met / PE (GF-19) | 3.56, ftr | 4.54, ftr |
| OPP-Met / PE (GF-19) | 2.90, as, fstr | 4.80, ftr |
| OPP-Met / CoexPP (70SPW) | 2.77, ftr | 3.41, ftr |
| Backed Foil / Nylon | 2.95, as | 1.27, as |
| Backed Foil / PET (92LBT) | 2.08, as | 2.47, as |

Example 47:

Hybrid Polyol of Example 11 was evaluated with Polyisocyanate I at a mix weight ratio of Polyisocyanate I: Hybrid Polyol 11 of 100 : 80 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.55, ftr | 3.07, ftr |
| CoexPP (75SLP) / PE (GF-19) | 3.12, ftr | 6.97, ftr |
| PET / PE (GF-19) | 3.06, as | 2.61, ftr |

(continued)

| Laminate Structure | Bond Strength (N / 15 mm) | |
|---|---|---|
| | 1 Day | 7 Day |
| Nylon / PE (GF-19) | 5.13, ftr | 7.58, ftr |
| PET-Met / PE (GF-19) | 1.72, ftr | 3.69, ftr |
| OPP-Met / PE (GF-19) | 4.87, ftr | 4.04, ftr |
| OPP-Met / CoexPP (70SPW) | 2.98, ftr | 2.92, ftr |
| Backed Foil / Nylon | 3.00, as | 2.11, as |
| Backed Foil / PET (92LBT) | 3.40, as | 2.71, as |

Example 48:

Hybrid Polyol of Example 11 was evaluated with Polyisocyanate I at a mix weight ratio of Polyisocyanate I: Hybrid Polyol 11 of 100 : 75 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.99, ftr | 3.96, ftr |
| CoexPP (75SLP) / PE (GF-19) | 2.84, ftr | 6.29, ftr |
| PET / PE (GF-19) | 4.57, fstr, ftr | 2.41, ftr |
| Nylon / PE (GF-19) | 6.10, ftr | 7.77, ftr |
| PET-Met / PE (GF-19) | 2.05, ftr | 3.22, ftr |
| OPP-Met / PE (GF-19) | 4.06, ftr | 4.02, ftr |
| OPP-Met / CoexPP (70SPW) | 2.48, ftr | 2.63, ftr |
| Backed Foil / Nylon | 3.03, as | 2.66, as |
| Backed Foil / PET (92LBT) | 3.87, as | 2.65, as |

Example 49:

Hybrid Polyol of Example 11 was evaluated with Polyisocyanate I at a mix weight ratio of Polyisocyanate I: Hybrid Polyol 11 of 100 : 70 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 3.50, ftr | 5.05, ftr |
| CoexPP (75SLP) / PE (GF-19) | 2.38, ftr | 5.52, ftr |
| PET / PE (GF-19) | 5.42, fstr, ftr | 2.54, ftr |

(continued)

| Laminate Structure | Bond Strength (N / 15 mm) | |
|---|---|---|
| | 1 Day | 7 Day |
| Nylon / PE (GF-19) | 8.14, ftr | 8.13, ftr |
| PET-Met / PE (GF-19) | 2.78, ftr | 3.10, ftr |
| OPP-Met / PE (GF-19) | 3.37, ftr | 4.17, ftr |
| OPP-Met / CoexPP (70SPW) | 2.45, ftr | 2.91, ftr |
| Backed Foil / Nylon | 1.60, as | 1.98, as |
| Backed Foil / PET (92LBT) | 2.36, as | 3.17, as |

Example 50:

Hybrid Polyol of Example 12 was evaluated with Polyisocyanate I at a mix weight ratio of Polyisocyanate I: Hybrid Polyol 12 of 100 : 86 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.50, ftr | 1.63, ftr |
| CoexPP (75SLP) / PE (GF-19) | 5.11, ftr | 6.31, ftr |
| PET / PE (GF-19) | 6.97, as, fstr | 8.26, ftr |
| Nylon / PE (GF-19) | 6.92, ft | 6.03, ftr |
| PET-Met / PE (GF-19) | 2.49, ftr | 8.38, ftr |
| OPP-Met / PE (GF-19) | 3.48, ftr | 6.38, ftr |
| OPP-Met / CoexPP (70SPW) | 3.37, ftr | 5.83, ftr |
| Backed Foil / Nylon | 3.32, as | 3.09, as |
| Backed Foil / PET (92LBT) | 1.68, as | 3.06, ftr |

Example 51:

Hybrid Polyol of Example 12 was evaluated with Polyisocyanate I at a mix weight ratio of Polyisocyanate I: Hybrid Polyol 12 of 100 : 81 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 3.47, ftr | 2.61, ftr |
| CoexPP (75SLP) / PE (GF-19) | 6.45, ftr | 6.17, ftr |
| PET / PE (GF-19) | 5.41, as, fstr | 7.84, ftr |
| Nylon / PE (GF-19) | 7.19, ftr | 6.53, ftr |
| PET-Met / PE (GF-19) | 2.96, ftr | 6.06, ftr |

(continued)

| Laminate Structure | Bond Strength (N / 15 mm) | |
|---|---|---|
| | 1 Day | 7 Day |
| OPP-Met / PE (GF-19) | 4.37, ftr | 6.11, ftr |
| OPP-Met / CoexPP (70SPW) | 3.76, ftr | 5.06, ftr |
| Backed Foil / Nylon | 3.14, as | 3.16, as |
| Backed Foil / PET (92LBT) | 3.41, as | 3.67, as |

Example 52:

Hybrid Polyol of Example 12 was evaluated with Polyisocyanate I at a mix weight ratio of Polyisocyanate I: Hybrid Polyol 12 of 100 : 76 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 4.50, ftr | 3.17, ftr |
| CoexPP (75SLP) / PE (GF-19) | 7.91, ftr | 6.14, ftr |
| PET / PE (GF-19) | 4.16, as, fstr | 6.99, ftr |
| Nylon / PE (GF-19) | 7.36, ftr | 7.80, ftr |
| PET-Met / PE (GF-19) | 3.54, ftr | 6.88, ftr |
| OPP-Met / PE (GF-19) | 6.09, ftr | 6.84, ftr |
| OPP-Met / CoexPP (70SPW) | 4.26, ftr | 4.18, ftr |
| Backed Foil / Nylon | 2.27, as | 3.03, as |
| Backed Foil / PET (92LBT) | 4.29, as | 1.41, as |

Example 53

Hybrid Polyol of Example 13 was evaluated with Polyisocyanate I at a mix weight ratio of Polyisocyanate I: Hybrid Polyol 13 of 100 : 38 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.32, ftr | 2.98, ftr |
| CoexPP (75SLP) / PE (GF-19) | 3.07, ftr | 6.54, ftr |
| PET / PE (GF-19) | 4.75, as, fstr | 5.06, ftr |
| Nylon / PE (GF-19) | 6.62, as, fstr | 3.44, ftr |
| PET-Met / PE (GF-19) | 2.67, ftr | 6.55, ftr |
| OPP-Met / PE (GF-19) | 3.32, ftr | 4.97, ftr |
| OPP-Met / CoexPP (70SPW) | 2.35, ftr | 1.76, ftr |
| Backed Foil / Nylon | 2.16, ftr | 5.33, ftr |

(continued)

| Laminate Structure | Bond Strength (N / 15 mm) | |
|---|---|---|
| | 1 Day | 7 Day |
| Backed Foil / PET (92LBT) | 2.99, ftr | 5.27, ftr |

Example 54:

Hybrid Polyol of Example 13 was evaluated with Polyisocyanate I at a mix weight ratio of Polyisocyanate I: Hybrid Polyol 13 of 100 : 35 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.07, ftr | 2.08, ftr |
| CoexPP (75SLP) / PE (GF-19) | 2.73, ftr | 5.25, ftr |
| PET / PE (GF-19) | 2.71, as, fstr | 4.39, ftr |
| Nylon / PE (GF-19) | 4.66, as, fstr | 3.07, ftr |
| PET-Met / PE (GF-19) | 2.28, ftr | 6.16, ftr |
| OPP-Met / PE (GF-19) | 3.14, ftr | 4.56, ftr |
| OPP-Met / CoexPP (70SPW) | 2.05, ftr | 1.83, ftr |
| Backed Foil / Nylon | 2.30, ftr | 5.23, ftr |
| Backed Foil / PET (92LBT) | 2.57, ftr | 5.05, ftr |

Example 55:

Hybrid Polyol of Example 13 was evaluated with Polyisocyanate I at a mix weight ratio of Polyisocyanate I: Hybrid Polyol 13 of 100 : 32.8 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.28, ftr | 1.81, ftr |
| CoexPP (75SLP) / PE (GF-19) | 2.31, ftr | 4.47, ftr |
| PET / PE (GF-19) | 2.49, ftr | 3.20, ftr |
| Nylon / PE (GF-19) | 3.03, as, fstr | 2.76, ftr |
| PET-Met / PE (GF-19) | 2.10, ftr | 5.95, ftr |
| OPP-Met / PE (GF-19) | 2.95, ftr | 4.31, ftr |
| OPP-Met / CoexPP (70SPW) | 1.80, ftr | 1.89, ftr |
| Backed Foil / Nylon | 1.99, ftr | 5.01, ftr |
| Backed Foil / PET (92LBT) | 1.89, ftr | 4.82, ftr |

Example 56:

Hybrid Polyol of Example 14 was evaluated with Polyisocyanate I at a mix weight ratio of Polyisocyanate I: Hybrid Polyol 13 of 100 : 41 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 3.20, ftr | 6.10, ftr |
| CoexPP (75SLP) / PE (GF-19) | 6.00, ftr | 3.40, ftr |
| PET / PE (GF-19) | 2.78, fstr, ftr | 6.02, ftr |
| Nylon / PE (GF-19) | 8.30, ftr | 8.34, ftr |
| PET-Met / PE (GF-19) | 4.69, ftr | 1.50, ftr |
| OPP-Met / PE (GF-19) | 5.16, ftr | 3.28, ftr |
| OPP-Met / CoexPP (70SPW) | 1.54, ftr | 2.02, ftr |
| Backed Foil / Nylon | 3.62, ftr | 2.55, ftr |
| Backed Foil / PET (92LBT) | 2.20, ftr | 5.21, ftr |

Example 57:

Hybrid Polyol of Example 14 was evaluated with Polyisocyanate I at a mix weight ratio of Polyisocyanate I: Hybrid Polyol 14 of 100 : 38.3 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.87, ftr | 2.47, ftr |
| CoexPP (75SLP) / PE (GF-19) | 6.23, ftr | 4.27, ftr |
| PET / PE (GF-19) | 3.06, fstr, ftr | 5.46, ftr |
| Nylon / PE (GF-19) | 7.95, ftr | 7.95, ftr |
| PET-Met / PE (GF-19) | 4.87, ftr | 2.37, ftr |
| OPP-Met / PE (GF-19) | 5.13, ftr | 3.76, ftr |
| OPP-Met / CoexPP (70SPW) | 1.78, ftr | 2.19, ftr |
| Backed Foil / Nylon | 4.00, ftr | 2.82, ftr |
| Backed Foil / PET (92LBT) | 2.35, ftr | 4.56, ftr |

Example 58:

Hybrid Polyol of Example 14 was evaluated with Polyisocyanate I at a mix weight ratio of Polyisocyanate I: Hybrid Polyol 14 of 100 : 35.8 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 2.39, ftr | 1.88, ftr |
| CoexPP (75SLP) / PE (GF-19) | 6.21, ftr | 7.49, ftr |
| PET / PE (GF-19) | 4.67, fstr, ftr | 5.83, ftr |
| Nylon / PE (GF-19) | 8.49, ftr | 8.49, ftr |
| PET-Met / PE (GF-19) | 4.94, ftr | 3.30, ftr |
| OPP-Met / PE (GF-19) | 5.50, ftr | 4.07, ftr |
| OPP-Met / CoexPP (70SPW) | 2.40, ftr | 2.63, ftr |
| Backed Foil / Nylon | 4.14, ftr | 3.12, ftr |
| Backed Foil / PET (92LBT) | 2.41, ftr | 4.00, ftr |

Comparative Example C59:

Polyether-Polyol of Comparative Example C15 was evaluated with Polyisocyanate I at a mix weight ratio of Polyisocyanate I : Polyether-Polyol 15 of 100 : 78 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 0.82, as | 1.07, as |
| CoexPP (75SLP) / PE (GF-19) | 0.65, as | 1.46, as |
| PET / PE (GF-19) | 0.83, as | 1.24, as |
| Nylon / PE (GF-19) | 0.83, as | 2.20, as |
| PET-Met / PE (GF-19) | 0.59, as | 2.29, as |
| OPP-Met / PE (GF-19) | 0.75, as | 2.02, as |
| OPP-Met / CoexPP (70SPW) | 0.38, as | 1.94, as |
| Backed Foil / Nylon | 0.31, as | 1.10, as |
| Backed Foil / PET (92LBT) | 0.21, as | 1.35, as |

Comparative Example C60:

Polyether-Polyol of Comparative Example C15 was evaluated with Polyisocyanate I at a mix weight ratio of Polyisocyanate I : Polyether-Polyol C15 of 100 : 73 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |

(continued)

| Laminate Structure | Bond Strength (N / 15 mm) | |
|---|---|---|
| | 1 Day | 7 Day |
| CoexPP (75SLP) / CoexPP (70SPW) | 0.60, as | 1.27, as |
| CoexPP (75SLP) / PE (GF-19) | 0.86, as | 1.44, as |
| PET / PE (GF-19) | 1.19, as | 1.50, as |
| Nylon / PE (GF-19) | 0.91, as | 1.98, as |
| PET-Met / PE (GF-19) | 0.80, as | 1.90, as |
| OPP-Met / PE (GF-19) | 0.85, as | 1.97, as |
| OPP-Met / CoexPP (70SPW) | 0.35, as | 1.24, as |
| Backed Foil / Nylon | 0.21, as | 0.81, as |
| Backed Foil / PET (92LBT) | 0.51, as | 1.16, as |

Comparative Example C61:

Polyether-Polyol of Comparative Example C15 was evaluated with Polyisocyanate I at a mix weight ratio of Polyisocyanate I : Polyether-Polyol C15 of 100 : 69 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 0.41, as | 1.61, as |
| CoexPP (75SLP) / PE (GF-19) | 0.96, as | 3.24, as |
| PET / PE (GF-19) | 1.29, as | 2.42, as |
| Nylon / PE (GF-19) | 0.44, as | 2.88, as |
| PET-Met / PE (GF-19) | 0.86, as | 2.53, as |
| OPP-Met / PE (GF-19) | 0.99, as | 1.85, as |
| OPP-Met / CoexPP (70SPW) | 0.51, as | 1.49, as |
| Backed Foil / Nylon | 0.37, as | 1.70, as |
| Backed Foil / PET (92LBT) | 0.57, as | 1.63, as |

Comparative Example C62 (Example)

Polyether-Polyol of Comparative Example C16 was evaluated with Polyisocyanate I at a mix weight ratio of Polyisocyanate I : Polyether-Polyol C16 of 100 : 79 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |

(continued)

| Laminate Structure | Bond Strength (N / 15 mm) | |
|---|---|---|
| | 1 Day | 7 Day |
| CoexPP (75SLP) / CoexPP (70SPW) | 0.88, as | 1.33, as |
| CoexPP (75SLP) / PE (GF-19) | 0.70, as | 1.07, as |
| PET / PE (GF-19) | 1.09, as | 1.31, as |
| Nylon / PE (GF-19) | 0.91, as | 1.05, as |
| PET-Met / PE (GF-19) | 0.96, as | 1.08, as |
| OPP-Met / PE (GF-19) | 1.10, as | 1.37, as |
| OPP-Met / CoexPP (70SPW) | 0.36, as | 1.05, as |
| Backed Foil / Nylon | 0.51, as | 0.92, as |
| Backed Foil / PET (92LBT) | 0.43, as | 0.49, as |

Comparative Example C63:

Polyether-Polyol of Comparative Example C16 was evaluated with Polyisocyanate I at a mix weight ratio of Polyisocyanate I : Polyether-Polyol C16 of 100 : 74 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |
| CoexPP (75SLP) / CoexPP (70SPW) | 1.04, as | 1.41, as |
| CoexPP (75SLP) / PE (GF-19) | 0.95, as | 1.25, as |
| PET / PE (GF-19) | 1.23, as | 1.35, as |
| Nylon / PE (GF-19) | 1.12, as | 1.30, as |
| PET-Met / PE (GF-19) | 1.02, as | 1.31, as |
| OPP-Met / PE (GF-19) | 1.23, as | 1.39, as |
| OPP-Met / CoexPP (70SPW) | 0.89, as | 1.09, as |
| Backed Foil / Nylon | 0.63, as | 1.02, as |
| Backed Foil / PET (92LBT) | 0.61, as | 0.77, as |

Comparative Example C64 (Example):

Polyether-Polyol of Comparative Example C16 was evaluated with Polyisocyanate I at a mix weight ratio of Polyisocyanate I : Polyether-Polyol C16 of 100 : 69 from a 50% Ethyl Acetate solution. The bond strength was examined as a function of curing time and is reported below.

| Laminate Structure | Bond Strength (N / 15 mm) | |
|---|---|---|
| | 1 Day | 7 Day |
| | | |

(continued)

| Laminate Structure | Bond Strength (N / 15 mm) | |
|---|---|---|
| | 1 Day | 7 Day |
| CoexPP (75SLP) / CoexPP (70SPW) | 1.21, as | 1.43, as |
| CoexPP (75SLP) / PE (GF-19) | 1.09, as | 1.37, as |
| PET / PE (GF-19) | 1.46, as | 1.67, as |
| Nylon / PE (GF-19) | 1.20, as | 1.64, as |
| PET-Met / PE (GF-19) | 1.21, as | 1.86, as |
| OPP-Met / PE (GF-19) | 1.38, as | 1.52, as |
| OPP-Met / CoexPP (70SPW) | 0.95, as | 1.28, as |
| Backed Foil / Nylon | 0.87, as | 1.10, as |
| Backed Foil / PET (92LBT) | 0.61, as | 1.10, as |

Example 65:

Hybrid Polyol of Example 13 was evaluated with Polyisocyanate II at a mix weight ratio of Polyisocyanate II: Hybrid Polyol 13 of 100 : 69 from a 50% Ethyl Acetate solution. The bond strength was examined as a function of curing time and is reported below.

| Laminate Structure | Bond Strength (N / 15 mm) | |
|---|---|---|
| | 7 Day | 14 Days |
| | | |
| CoexPP (75SLP) / CoexPP (70SPW) | 1.89, ftr | 2.14, ftr |
| CoexPP (75SLP) / PE (GF-19) | 2.03, ftr | 3.03, ftr |
| PET / PE (GF-19) | 3.08, ftr | 1.32, ftr |
| Nylon / PE (GF-19) | 3.68, ftr | 1.71, ftr |
| PET-Met / PE (GF-19) | 8.04, ftr | 2.71, ftr |
| OPP-Met / PE (GF-19) | 7.02, ftr | 3.27, ftr |
| OPP-Met / CoexPP (70SPW) | 2.55, ftr | 1.88, ftr |
| Backed Foil / Nylon | 0.77, as | 0.44, as |
| Backed Foil / PET (92LBT) | 1.49, ftr | 1.02, as |
| Backed Foil / CPP (3 mil) | 2.10, as | 2.42, as |
| PET (92LBT) / CPP (3 mil) | 8.18, ftr | 2.13, ftr |
| Nylon / CPP (3 mil) | 6.12, ftr | 3.59, ftr |

Example 66:

Hybrid Polyol of Example 13 was evaluated with Polyisocyanate II at a mix weight ratio of Polyisocyanate II: Hybrid Polyol 13 of 100 : 65 from a 50% Ethyl Acetate solution. The bond strength was examined as a function of curing time and is reported below.

| Laminate Structure | Bond Strength (N / 15 mm) | |
|---|---|---|
| | 7 Day | 14 Days |
| | | |
| CoexPP (75SLP) / CoexPP (70SPW) | 1.70, ftr | 1.85, ftr |
| CoexPP (75SLP) / PE (GF-19) | 7.43, fstr, ftr | 2.51, ftr |
| PET / PE (GF-19) | 2.42, ftr | 1.72, ftr |
| Nylon / PE (GF-19) | 1.28, ftr | 1.61, ftr |
| PET-Met / PE (GF-19) | 6.63, ftr | 2.10, ftr |
| OPP-Met / PE (GF-19) | 3.27, ftr | 3.10, ftr |
| OPP-Met / CoexPP (70SPW) | 1.58, ftr | 1.77, ftr |
| Backed Foil / Nylon | 0.75, as | 0.93, as |
| Backed Foil / PET (92LBT) | 0.54, as | 0.74, as |
| Backed Foil / CPP (3 mil) | 1.99, as | 2.32, as |
| PET (92LBT) / CPP (3 mil) | 4.15, ftr | 2.41, ftr |
| Nylon / CPP (3 mil) | 10.30, ftr | 4.68, ftr |

Example 67:

Hybrid Polyol of Example 13 was evaluated with Polyisocyanate II at a mix weight ratio of Polyisocyanate II: Hybrid Polyol 13 of 100 : 61 from a 50% Ethyl Acetate solution. The bond strength was examined as a function of curing time and is reported below.

| Laminate Structure | Bond Strength (N / 15 mm) | |
|---|---|---|
| | 7 Day | 14 Days |
| | | |
| CoexPP (75SLP) / CoexPP (70SPW) | 1.41, ftr | 1.51, ftr |
| CoexPP (75SLP) / PE (GF-19) | 3.91, ftr | 2.12, ftr |
| PET / PE (GF-19) | 2.07, ftr | 1.74, ftr |
| Nylon / PE (GF-19) | 1.14, ftr | 1.48, ftr |
| PET-Met / PE (GF-19) | 6.12, ftr | 1.78, ftr |
| OPP-Met / PE (GF-19) | 3.10, ftr | 2.86, ftr |
| OPP-Met / CoexPP (70SPW) | 1.33, ftr | 1.63, ftr |
| Backed Foil / Nylon | 1.18, as | 0.41, as |
| Backed Foil / PET (92LBT) | 0.42, as | 0.69, as |
| Backed Foil / CPP (3 mil) | 1.91, as | 1.78, as |
| PET (92LBT) / CPP (3 mil) | 4.09, ftr | 2.08, ftr |
| Nylon / CPP (3 mil) | 8.14, ftr | 3.99, ftr |

Example 68:

Hybrid Polyol of Example 14 was evaluated with Polyisocyanate II at a mix weight ratio of Polyisocyanate II: Hybrid Polyol 14 of 100 : 76 from a 50% Ethyl Acetate solution. The bond strength was examined as a function of curing time and is reported below.

| Laminate Structure | Bond Strength (N / 15 mm) | |
|---|---|---|
| | 7 Day | 14 Days |
| | | |
| CoexPP (75SLP) / CoexPP (70SPW) | 1.09, ftr | 2.45, ftr |
| CoexPP (75SLP) / PE (GF-19) | 5.05, ftr | 5.07, ftr |
| PET / PE (GF-19) | 2.03, ftr | 1.74, ftr |
| Nylon / PE (GF-19) | 5.20, ftr | 3.42, ftr |
| PET-Met / PE (GF-19) | 7.06, ftr | 7.75, ftr |
| OPP-Met / PE (GF-19) | 3.15, ftr | 1.51, ftr |
| OPP-Met / CoexPP (70SPW) | 1.55, ftr | 1.82, ftr |
| Backed Foil / Nylon | 0.77, as | 0.60, as |
| Backed Foil / PET (92LBT) | 1.56, as | 0.80, as |
| Backed Foil / CPP (3 mil) | 2.52, as | 2.65, as |
| PET (92LBT) / CPP (3 mil) | 1.82, ftr | 1.80, ftr |
| Nylon / CPP (3 mil) | 8.29, ftr | 2.85, ftr |

Example 69:

Hybrid Polyol of Example 14 was evaluated with Polyisocyanate II at a mix weight ratio of Polyisocyanate II: Hybrid Polyol 14 of 100 : 72 from a 50% Ethyl Acetate solution. The bond strength was examined as a function of curing time and is reported below.

| Laminate Structure | Bond Strength (N / 15 mm) | |
|---|---|---|
| | 7 Day | 14 Days |
| | | |
| CoexPP (75SLP) / CoexPP (70SPW) | 1.09, ftr | 2.04, ftr |
| CoexPP (75SLP) / PE (GF-19) | 4.63, ftr | 4.71, ftr |
| PET / PE (GF-19) | 1.84, ftr | 2.03, ftr |
| Nylon / PE (GF-19) | 4.83, ftr | 3.10, ftr |
| PET-Met / PE (GF-19) | 7.02, ftr | 6.26, ftr |
| OPP-Met / PE (GF-19) | 3.04, ftr | 2.02, ftr |
| OPP-Met / CoexPP (70SPW) | 1.21, ftr | 1.40, ftr |
| Backed Foil / Nylon | 0.71, as | 0.80, as |
| Backed Foil / PET (92LBT) | 1.12, as | 1.50, as |
| Backed Foil / CPP (3 mil) | 1.87, as | 2.13, as |
| PET (92LBT) / CPP (3 mil) | 1.54, ftr | 1.68, ftr |
| Nylon / CPP (3 mil) | 7.24, ftr | 2.79, ftr |

Example 70:

Hybrid Polyol of Example 14 was evaluated with Polyisocyanate II at a mix weight ratio of Polyisocyanate II:

Hybrid Polyol 14 of 100 : 67 from a 50% Ethyl Acetate solution. The bond strength was examined as a function of curing time and is reported below.

| Laminate Structure | Bond Strength (N / 15 mm) | |
|---|---|---|
| | 7 Day | 14 Days |
| | | |
| CoexPP (75SLP) / CoexPP (70SPW) | 0.90, ftr | 1.84, ftr |
| CoexPP (75SLP) / PE (GF-19) | 4.09, ftr | 3.97, ftr |
| PET / PE (GF-19) | 1.59, ftr | 1.78, ftr |
| Nylon / PE (GF-19) | 4.32, ftr | 3.08, ftr |
| PET-Met / PE (GF-19) | 6.40, ftr | 6.05, ftr |
| OPP-Met / PE (GF-19) | 2.50, ftr | 1.71, ftr |
| OPP-Met / CoexPP (70SPW) | 1.13, ftr | 1.38, ftr |
| Backed Foil / Nylon | 1.14, as | 0.63, as |
| Backed Foil / PET (92LBT) | 1.32, as | 1.07, as |
| Backed Foil / CPP (3 mil) | 1.37, as | 1.78, as |
| PET (92LBT) / CPP (3 mil) | 1.24, ftr | 1.51, ftr |
| Nylon / CPP (3 mil) | 6.36, ftr | 3.61, ftr |

Example 71: Ranking of Hybrid Polyols

Based on the aggregate of the adhesion data, the polyols tested in the Examples are ranked for adhesion performance in the following order, as listed by example number, from best (rank #1, Example 14) to worst (rank #16, Comparative Example C16):

| Rank order | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Ex. number | 14 | 13 | 5 | 6 | 3 | 8 | 10 | 7 | 11 | 12 | 4 | 2 | 9 | 1 | C15 | C16 |

## Claims

**1.** A method of forming a laminated structure comprising

I bringing a component A into contact with a component B to form an adhesive composition,
II forming a layer of said adhesive composition on one surface of a first film, and
III bringing the surface of a second film into contact with said layer of adhesive composition;

wherein said component A comprises one or more polyisocyanate, and wherein said component B comprises one or more hybrid polyol comprising reaction residues of

(i). one initiator polyol having three hydroxyl groups, wherein the number-average molecular weight of said initiator polyol is 900 or lower,
(ii). one or more anhydride, and
(iii). two or more alkylene oxides having the structure

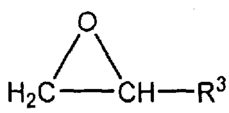

wherein said $R^3$ is an alkyl group,

wherein the mole ratio of said reaction residues of anhydride to said reaction residues of initiator polyol is from 1.0:1 to 3:1.

2. The method of claim 1, wherein the initiator polyol has three pendant hydroxyl groups and the mole ratio of said reaction residues of anhydride (ii) to said reaction residues of initiator polyol (i) is from 1.0:1 to 1.5:1.

3. The method of claim 1, wherein the mole ratio of said reaction residues (iii) to said reaction residues of initiator polyol is 20:1 or less.

4. The method of claim 1, wherein at least one said reaction residue of an anhydride is attached directly to one of said reaction residues (iii).

5. The method of claim 1, wherein mole ratio of all said reaction residues (iii) to said reaction residues of initiator polyol is from 2:1 to 10:1.

6. The method of claim 1, wherein the length of the longest chain of adjacent reaction residues (iii) to be found in the molecule of the hybrid polyol is 6 or lower.

7. The method of claim 1, wherein said anhydride is phthalic anhydride.

8. A laminate structure made by the method of claim 1.

## Patentansprüche

1. Ein Verfahren zum Bilden einer laminierten Struktur, das Folgendes beinhaltet:

I In-Kontakt-Bringen einer Komponente A mit einer Komponente B, um eine Klebemittelzusammensetzung zu bilden,
II Bilden einer Schicht der Klebemittelzusammensetzung auf einer Oberfläche eines ersten Films und
III In-Kontakt-Bringen der Oberfläche eines zweiten Films mit der Schicht Klebemittelzusammensetzung;

wobei die Komponente A ein oder mehrere Polyisocyanate beinhaltet und
wobei die Komponente B ein oder mehrere Hybridpolyole beinhaltet, die Reaktionsrückstände von Folgendem beinhalten:

(i). einem Initiatorpolyol mit drei Hydroxylgruppen, wobei das Zahlenmittel der Molmasse des Initiatorpolyols 900 oder weniger ist,
(ii). einem oder mehreren Anhydriden und
(iii). zwei oder mehr Alkylenoxiden mit der folgenden Struktur:

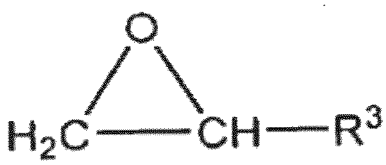

wobei das $R^3$ eine Alkylgruppe ist,

wobei das Molverhältnis der Reaktionsrückstände von Anhydrid zu den Reaktionsrückständen von Initiatorpolyol 1,0 : 1 bis 3 : 1 ist.

2. Verfahren gemäß Anspruch 1, wobei das Initiatorpolyol drei anhängende Hydroxylgruppen aufweist und das Molverhältnis der Reaktionsrückstände von Anhydrid (ii) zu den Reaktionsrückständen von Initiatorpolyol (i) 1,0 : 1 bis 1,5 : 1 ist.

3. Verfahren gemäß Anspruch 1, wobei das Molverhältnis der Reaktionsrückstände (iii) zu den Reaktionsrückständen von Initiatorpolyol 20 : 1 oder weniger ist.

4. Verfahren gemäß Anspruch 1, wobei mindestens einer des Reaktionsrückstands eines Anhydrids direkt an einem der Reaktionsrückstände (iii) angelagert ist.

5. Verfahren gemäß Anspruch 1, wobei das Molverhältnis aller Reaktionsrückstände (iii) zu den Reaktionsrückständen von Initiatorpolyol 2 : 1 bis 10 : 1 ist.

6. Verfahren gemäß Anspruch 1, wobei die Länge der längsten Kette angrenzender Reaktionsrückstände (iii), die in dem Molekül des Hybridpolyols zu finden sind, 6 oder weniger ist.

7. Verfahren gemäß Anspruch 1, wobei das Anhydrid Phthalsäureanhydrid ist.

8. Eine Laminatstruktur, die durch das Verfahren gemäß Anspruch 1 hergestellt ist.

**Revendications**

1. Un procédé de formation d'une structure stratifiée comprenant

I la mise en contact d'un constituant A avec un constituant B afin de former une composition adhésive,
II la formation d'une couche de ladite composition adhésive sur une surface d'un premier film, et
III la mise en contact de la surface d'un deuxième film avec ladite couche de composition adhésive ;

où ledit constituant A comprend un polyisocyanate ou plus, et
où ledit constituant B comprend un polyol hybride ou plus comprenant des résidus de réaction

(i). d'un polyol initiateur ayant trois groupes hydroxyle, où la masse moléculaire moyenne en nombre dudit polyol initiateur est de 900 ou en-deçà,
(ii). d'un anhydride ou plus, et
(iii). de deux oxydes d'alkylène ou plus ayant la structure

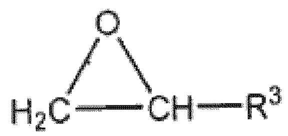

où ledit $R^3$ est un groupe alkyle,

où le rapport molaire desdits résidus de réaction d'anhydride auxdits résidus de réaction de polyol initiateur va de 1,0/1 à 3/1.

2. Le procédé de la revendication 1, où le polyol initiateur a trois groupes hydroxyle latéraux et le rapport molaire desdits résidus de réaction d'anhydride (ii) auxdits résidus de réaction de polyol initiateur (i) va de 1,0/1 à 1,5/1.

3. Le procédé de la revendication 1, où le rapport molaire desdits résidus de réaction (iii) auxdits résidus de réaction de polyol initiateur est de 20/1 ou moins.

4. Le procédé de la revendication 1, où au moins un dit résidu de réaction d'un anhydride est attaché directement à un desdits résidus de réaction (iii).

5. Le procédé de la revendication 1, où le rapport molaire de tous lesdits résidus de réaction (iii) auxdits résidus de réaction de polyol initiateur va de 2/1 à 10/1.

6. Le procédé de la revendication 1, où la longueur de la plus longue chaîne de résidus de réaction (iii) adjacents à

être trouvée dans la molécule du polyol hybride est de 6 ou en-deçà.

**7.** Le procédé de la revendication 1, où ledit anhydride est l'anhydride phtalique.

**8.** Une structure de stratifié réalisée grâce au procédé de la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6462163 B
- US 6855844 B
- US 2010087593 A1
- US 20130035467 A


### Non-patent literature cited in the description


- **F. HEATLEY.** *Macromolecules,* 1988, vol. 21 (9), 2713-2721